**Europäisches Patentamt**

**European Patent Office**

**Office européen des brevets**

(19)

(11) Publication number: **0 174 768**
A2

# (12) EUROPEAN PATENT APPLICATION

(21) Application number: **85306053.1**

(22) Date of filing: **27.08.85**

(51) Int. Cl.⁴: **G 01 N 17/00**

(30) Priority: **31.08.84 US 646236**
**03.06.85 US 740497**

(43) Date of publication of application:
**19.03.86 Bulletin 86/12**

(84) Designated Contracting States:
**AT BE CH DE FR GB IT LI LU NL SE**

(71) Applicant: **CITIES SERVICE OIL & GAS CORPORATION**
**110 West Seventh Street**
**Tulsa Oklahoma 74102(US)**

(72) Inventor: **Jasinski, Raymond J.**
**3705 E 108 Street**
**Tulsa Oklahoma 74137(US)**

(74) Representative: **Harrison, David Christopher et al,**
**MEWBURN ELLIS & CO 2/3 Cursitor Street**
**London EC4A 1BQ(GB)**

(54) A corrosion probe and method for measuring corrosion rates.

(57) A corrosion probe has at least one first (16), at least one second (18), and at least one third electrode (20) with a dielectric (22) positioned between the electrodes, the dielectric having a structure defining an ionically conductive surface (23). It may be used with a potentiostat (40) electrically attached to the electrodes of the corrosion probe, and a signal generator (42) electrically communicating with the potentiostat. A process for measuring the corrosion rates of metals in a corrosive liquid environment comprising attaching electrically the corrosion probe to a potentiostat. The corrosion probe is inserted into the corrosive liquid environment and either a predetermined known amperage is signaled to the potentiostat or a predetermined known difference in potential is signaled to the potentiostat. If a predetermined known amperage is signaled, the potentiostat transmits this amperage through the first and third electrodes of the corrosion probe. The electromotive forces between the first and second electrode and between the first electrode and the corrosive liquid are measured, while the electromotive force between areas respectively in the corrosive liquid environment in proximity to the first and second electrodes is calculated. The corrosion current is computed from the determined electromotive force and the predetermined known amperage. If a predetermined known difference in potential is signaled, the potentiostat transmits this difference in potential through the first and second electrodes of the corrosion probe. The amperage between the first and third electrodes and the emf between the first electrode and the corrosion liquid are measured, while the electromotive force between areas in the corrosive liquid environment respectively in proximity to the first and second electrodes is calculated. The corrosion current is computed from the determined electromotive force and the measured amperage.

./...

Fig.1.

SIGNAL GENERATOR

POTENTIOSTAT 40

Fig.3.

## A CORROSION PROBE AND METHOD
## FOR MEASURING CORROSION RATES

This invention relates to measuring corrosion rates. More specifically, this invention provides a corrosion probe and a method for measuring rapidly corrosion rates of metals, or the like, in a corrosive liquid environment.

When crude oil is produced, it often contains corrosive components such as brines. The use of carbon dioxide as a "gas lift" to assist the production of crude oil, or naturally occurring carbon dioxide, is another corrosive component that further increases the corrosivity of the crude oil. Corrosion destroys production tubing which can result in production losses and costly workover of the well.

Not all corrosive brine liquid environment, such as brine/crude oil/gas mixtures, induce the same rate of corrosion on metals. Some corrosive liquid environments corrode metals at a more rapid rate than others. It is desirable and cost effective to treat with a corrosive inhibitor those corrosive liquid environments, such as, brine/crude oil/gas mixtures, which are substantially corrosive while not treating or closely monitoring the treatment of those corrosive liquid environments which are negligibly corrosive. This is possible only if the combination of pressure, temperature, gas and fluid compositions which will be corrosive can be predicted along with those metal alloys and inhibitor systems which will minimize corrosion. Reliable predictions and concomitant material selections are possible only if accelerated, accurate and unequivocal corrosion rate measurements can first be made under controlled environmental and chemical conditions, which are identical, or closely approximating those experienced in the field. It is therefore preferable if not necessary that corrosion rate measurements be made directly in corrosive liquid environments in order to obtain reliable predictions along with those metal alloys and inhibitors which will prevent corrosion or keep it at a minimum.

Electrochemical polarization measurements are widely used to measure the corrosion rates of metals in brines. The technique is rapid and accurate and, therefore, the preferred method for monitoring corrosivity. However, the electrical resistance of oil/brine mixtures can be many orders of magnitude greater than the brine itself. This results in an IR voltage correction (current x inter-electrode resistance) many times greater than the voltage involved in the corrosion process (e.g., 10 volts vs. .01 volts). This results in considerable scatter and error in the data, limiting the use of electrochemical polarization methods for measuring the corrosivity of oil/brine mixtures.

U.S. Patent No. 3,331,021 by Marsh, et al. relates to a method and apparatus for measuring instantaneous corrosion rates of specimens exposed to corrosive electrolytes. U.S. Patent No. 3,337,440 by Nestor teaches a novel and improved apparatus which may be employed to investigate the corrosive characteristics of metallic substances and/or the effectiveness of corrosion inhibitors in water insoluble non-conducting environments. U.S. Patent No. 3,361,660 by Chittum, et al. provides an apparatus for measuring the electrochemical potential of the inner surface of a tank containing brine. The apparatus comprises a tubular member that can be inserted through an access opening, such as a gate valve that may be installed for such purpose or one that is already available, in order to make electrolytic contact with the brine solution in the tank.

U.S. Patent No. 3,436,320 by Marsh discloses a method and apparatus for determining the redox current and the corrosion current in a redox solution. The electrodes include an electrode with a corrodible metal to be tested, and a reference electrode. The same direct current voltage is applied to an inert electrode and the reference electrode in measuring the currents. U.S. Patent No. 3,406,101 by Kilpatrick is concerned with correlating the polarization characteristics of metals with the corrosion rate of the metals, and with the design of a compact and simple apparatus adapted to permit an easy and rapid determination of the rates at which the metals are corroding in electrolytic solutions by means of polarization measurements. U.S. Patent No. 3,486,996 by Annand discloses a corrosion test probe assembly for determining the corrosion rate of metallic constructional material exposed to a corradant electrolyte by means of polarization measurements. U.S. Patent No. 3,518,530 by Wilson teaches the procurement and use of polarization characteristics of metals such that when placed in underground formations, either directly or in cooperation with other electrical properties of the formations, determine the nature of the formation and/or the fluid contents of those formations. U.S. Patent No. 3,607,673 by Seyl discloses a system for correcting for the IR drop between electrodes when corrosion rate of the electrodes is measured by applying a small DC voltage across the electrodes. U.S. Patent No. 4,040,931 by Wilson relates to the instruments and the electrochemcial techniques used in measuring and testing corrosion processes.

None of the foregoing prior art teach or suggest the particular corrosion probe, or the processes of this invention for measuring the corrosion rates of metals in a corrosive liquid environment and which does not include any of the previously mentioned deficiencies.

- 4 - **0174768**

## Summary of the Invention

It is therefore an object of this invention to provide a corrosion probe for measuring rapialy and accurately the corrosivity of a corrosive liquid environment on metals.

It is another object of this invention to provide a process for measuring the corrosion rates of metals, or the like, in a corrosive liquid environment which is more rapid than with conventional weight-loss methods.

It is yet another object of this invention to provide a corrosion probe which can be inserted directly into a corrosive liquid environment in order to obtain in situ electrochemical measurement of the corrosivity of the corrosive liquid environment on metals.

Still other objects will be apparent to those skilled in the art from the following description of this invention.

The foregoing objects are achieved according to the practice of the invention. Broadly, this invention comprises a corrosion probe means utilized in measuring the corrosion rates of metals, or the like, in a corrosive liquid environment. The corrosion probe has at least one first electrode means, at least one second electrode means, and at least one third electrode means. A dielectric means is positioned between the first and the second electrode means and between the second and the third electrode means. The dielectric means has a structure defining an ionically conductive surface. This invention also comprises an apparatus for measuring the corrosion rates of metals, or the like, in a corrosive liquid environment comprising in combination at least one first electrode means having at least one first depending conductor means attached thereto. At least one second depending conductor means is bound to at least one second electrode means, and at least one third

- 5 -

**0174768**

depending conductor means is connected to at least one third electrode means. A dielectric means is positioned between each of the first and second electrode means and between each of the second and the third electrode means. The dielectric means has a structure defining an ionically conductive surface. At least one potentiostat means is electrically engaged to the at least one first, to the at least one second, and to the at least one third depending conductor means to transmit amperages through each of the first electrode means, over the ionic dielectric surface between each of the first electrode means and each of the third electrode means, and through each of the third electrode means back to the potentiostat means.

In another embodiment of the invention, the at least one potentiostat means transmits differences in potential through each of the first electrode means, over the ionic dielectric surface between each of the first electrode means and the second electrode means, and through each of the second electrode means back to the potentiostat means. The apparatus also comprises at least one means for measuring the difference in potential between each of the first electrode means and each of the second electrode means and/or at least one means for measuring the amperage being conducted through the first electrode means and the third electrode means. At least one means is included for signaling to the potentiostat means the difference in potential and/or the amperage which is to be transmitted by same. This invention further comprises a process for measuring the corrosion rates of metals, or the like, in a corrosive liquid environment. The process includes attaching electrically the corrosion probe means to a potentiostat means. The ohmic resistance between the first and the second electrode means is known, and the electromotive force between the second electrode means and an area in a surrounding fluid in general microscopic proximity thereto is also known. The corrosion probe means is inserted into the corrosive liquid environment and either a predetermined known amperage is signaled to the potentiostat means which transmits this amperage through the first electrode means and the third electrode means, and through the third electrode means back to the potentiostat means; or a predetermined known difference in potential is signaled to the potentiostat means which transmits this difference in potential through the first electrode means, over the ionic dielectric surface between the first electrode means and the second electrode means, and through the second electrode means back to the potentiostat means. If a predetermined known amperage is signaled, simultaneously with this signaling, the electromotive force between the first and the second electrode means is measured. If a predetermined known difference in potential is signaled, simultaneously with this signaling, the amperage is measured that is being conducted through the first electrode means, over the ionic dielectric surface between the first electrode means and the third electrode means, and through the third electrode means back to the potentiostat means. From the predetermined known amperage, or from the measured amperage, and the predetermined known ohmic resistance between the first and second electrode means, an electromotive force between an area in the corrosive liquid environment in general microscopic proximity to the first electrode means and an area in the corrosive liquid environment in general microscopic proximity to the second electrode means is calculated. The electromotive force between the first electrode means and an area in the corrosive liquid environment in general microscopic proximity to the first electrode means is determined by subtracting from the measured electromotive force, or the predetermined known difference in potential between the second electrode means and an area in a surrounding fluid means in general microscopic proximity thereto, the predetermined known electromotive force and the electromotive force calculated

0174768

-7-

that was derived from the predetermined known amperage or from the measured amperage, and the predetermined known ohmic resistance between the first and the second electrode means. The corrosion current on the first electrode means is computed from the predetermined known amperage or the measured amperage, and from the determined electromotive force between the first electrode means and an area in the corrosive liquid environment in general microscopic proximity to the first electrode means. The corrosion current may be converted into a corrosion rate.

Thus, by the practice of this invention, there is provided a corrosion probe means, and an apparatus and a process for measuring the corrosion rates of metals, or the like, in a corrosive liquid environment which overcomes such problems as the ohmic resistance of hydrocarbon/brine mixtures being much greater than brine itself and resulting in a voltage correction much larger than the voltage associated with the process of corrosion.

## Brief Description of the Drawings

Figure 1 is a perspective view of the corrosion probe inserted into and attached to a pipe transporting a corrosive liquid, along with the circuitry diagram for the apparatus that measures the corrosion rate of metals in a corrosive liquid environment;

Figure 2 is an exploded perspective view of one embodiment of the corrosion probe that utilizes a plurality of rectangular shaped plates for the electrodes;

Figure 3 is a bottom plan view of the embodiment of the corrosion probe of Figure 2 including a cylindrical sheath means surrounding the corrosion probe and a retaining material means for retaining the corrosion probe within the sheath means;

Figure 4 is an exploded partial vertical sectional view of the dielectric including the dielectric surface aligned with plurality of ionically conductive negative charged ions chemically bound to the surface of the dielectric;

Figure 5 is an exploded partial vertical sectional view of the dielectric including the dielectric surface having a plurality of alternating negative and positive charged ions imbedded therein;

Figure 6 is a partial vertical sectional view of one embodiment of the corrosion probe having a cylindrical sheath means surrounding three cylindrical electrodes;

Figure 7 is a bottom plan view of the embodiment of the corrosion probe of Figure 6;

Figure 8 is a partial vertical sectional view of another embodiment of the corrosion probe having three cylindrical electrodes with no cylindrical sheath means;

Figure 9 is a bottom plan view of the embodiment of the corrosion probe of Figure 8;

Figure 10 is another embodiment of the corrosion probe having three cylindrical electrodes with noncylindrical

0174768

sheath means;

Figure 11 is yet another embodiment of the corrosion probe having a cylindrical sheath means surrounding three cylindrical electrodes;

Figure 12 is a current potential curve for probe before and after treatment with hot KOH;

Figure 13 is a corrosion current/time profile vs. % brine in a crude at $185^{\circ}F$ with 760 psi. carbon dioxide;

Figure 14 is a corrosion current/time profile vs. % brine for parallel electrode probe in a crude at $185^{\circ}$ with 760 psi. carbon dioxide;

Figure 15 is a corrosion current vs. time for N80 steel in a 40% brine crude at $185^{\circ}F$ with 760 psi. carbon dioxide; and

Figure 16 is a corrosion rate (weight loss) vs. time for N80 in 40% brine + crude B + 760 psi. $CO_2$ + $185^{\circ}F$.

Figure 18 is a perspective view of the improved corrosion probe inserted into and attached to a pipe transporting a corrosive liquid, along with the circuitry diagram for the apparatus that measures the corrosion rate of metals in a corrosive liquid environment;

Figure 19 is an exploded partial vertical sectional view of the dielectric between the working and reference electrode including the dielectric surface aligned with plurality of ionically conductive negative charged ions chemically bound to the surface of the dielectric;

Figure 20 is an exploded partial vertical sectional view of the dielectric between the working and reference electrode including the dielectric surface having a plurality of alternating negative and positive charged ions imbedded therein;

Figure 21 is a side elevational view of an embodiment of the improved corrosion probe that has a working and a reference electrode with depending conductors therefrom and a third conductor depending from the side of an autoclave that has been sectionalized;

Figure 22 is a vertical view of an embodiment of the improved corrosion probe that also has a working and a reference electrode with two depending conductors therefrom and a third conductor depending from a pipe that has been sectioned and which transports a corrosive liquid;

Figure 23 is a partial vertical sectional view of one embodiment of the improved corrosion probe having a cylindrical working electrode surrounding a reference

electrode;

Figure 24 is a bottom plan view of the embodiment of the corrosion probe of Figure 6;

Figure 25 is a partial vertical sectional view of another embodiment of the improved corrosion probe having the reference and the working electrodes with an ionic surface therebetween and a cylindrical sheath means surrounding the two electrodes;

Figure 26 is a partial vertical sectional view of the embodiment of the improved corrosion probe of Figure 8, but without the sheath means and with alternating negative and positive charged ions imbedded therein;

Figure 27 is a horizontal sectional view taken in direction of the arrows and along the plane of line 10-10 in Figure 4;

Figure 28 is a horizontal sectional view taken in direction of the arrows and along the plane of line 11-11 in Figure 8;

Figure 29 is another embodiment of the improved corrosion probe having a cylindrical sheath means surrounding a reference and a working electrode;

Figure 30 is a bottom plan view of the embodiment of the improved corrosion probe of Figure 12;

Figure 31 is a partial vertical sectional view of another embodiment of the improved corrosion probe having three electrodes with no cylindrical sheath means;

Figure 32 is a partial vertical sectional view of yet another probe having three electrodes and a cylindrical sheath means;

Figure 33 is a partial vertical sectional view of another embodiment of the improved corrosion probe having three electrodes with a cylindrical sheath means;

Figure 34 is a bottom plan view of the embodiment of the corrosion probe of Figure 16;

Figure 35 is a partial vertical sectional view of still yet another embodiment of the improved corrosion probe having three electrodes with no cylindrical sheath means;

Figure 36 is a bottom plan view of the embodiment of the improved corrosion probe of Figure 18;

Figure 37 is a current potential curve for the improved probe before and after treatment with hot KOH;

Figure 38 is corrosion rate (mpy) vs. time (hours) for the improved corrosion probe, the corrosion probe in my co-pending application, and weight loss, in a 40% brine crude at 185°F with 760 psi carbon dioxide; and

Figure 39 is meter current reading versus days for the improved corrosion probe, corrosion rate (mpy) versus days for the improved corrosion probe, determined % water cut versus days, and prior art device corrosion reading versus days, all from a well flowing 12,500 bbls. oil per day, 200 psi, 150° F, 12% $CO_2$, and 200 ppm $H_2S$.

## Detailed Description of the Invention

Referring in detail now to the drawings, wherein similar parts of the invention are represented by like reference numerals, there is seen an apparatus, generally illustrated as 10, for measuring the corrosion rate of metals, or the like, in a corrosive liquid environment, such as a hydrocarbon/brine mixture. The apparatus 10 comprises a corrosion probe, generally illustrated as 12, which is inserted into the corrosive liquid environment contained within a pipe 14, an autoclave (not shown in the drawings), or the like. Corrosion probe 12 includes at least one working electrode 16, at least one reference electrode 18, and at least one counter electrode 20. An insulation or dielectric 22 is positioned between each of the working electrodes 16 and the reference electrodes 18 and between each of the reference electrodes 18 and the counter electrodes 20. The dielectric 22 has an ionically conductive electronically insulating surface 23. The reference electrode 18 is positioned preferably between the working electrode 16 and the counter electrode 20. The working electrode 16, the reference electrode 18, and the counter electrode 20 terminate into a working electrode end 24, a reference electrode end 26, and a counter electrode end 28, respectively, which are essentially in a co-planar relationship among and with respect to each other. The ionically conductive surface 23 of the dielectric 22 is also preferably in a co-planar relationship among and with respect to the working electrode end 24, the reference electrode end 26, and the counter electrode end 28. The corrosion probe 12 may additionally comprise a sheath 30 that terminates into a sheath end 32. The dielectric 22, preferably without the ionically conductive surface 23, may also be positioned between the counter electrode 20 and the sheath 30. The sheath end 32 and the dielectric 22 between the counter electrode 20 and the sheath 30 are preferably also co-planar with respect to the ionically conductive surface 23 and with respect to the working electrode end 24, the reference electrode end 26, and the counter electrode end 28.

Depending conductors 34, 36 and 38 attach electrically to the working electrode 16, the reference electrode 18, and the counter electrode 20, respectively, and interconnect electrically the corrosion probe 12 with a device, generally illustrated as 39, which is capable of delivering or transmitting to the probe 12, a constant voltage or a constant current. Preferably, device 39 comprises a potentiostat 40, which is conventional in design and a signal generator 42, which is also conventional in design. Signal generator 42 engages electrically the potentiostat 40 via conductors 44-44 for instructing or signaling a predetermined known amperage, or a predetermined known difference in potential, to the potentiostat 40 which transmits the same to the corrosion probe 12 through one or more of the conductors 34, 36 and 38, as will be explained hereafter.

Variable resistor 46 is connected in series within conductor 34. Meter 48 is electrically attached across resistor 46 to measure the current through conductor 34, and volt meter 50 interconnects conductors 34 and 36 to measure the difference in potential between these two conductors.

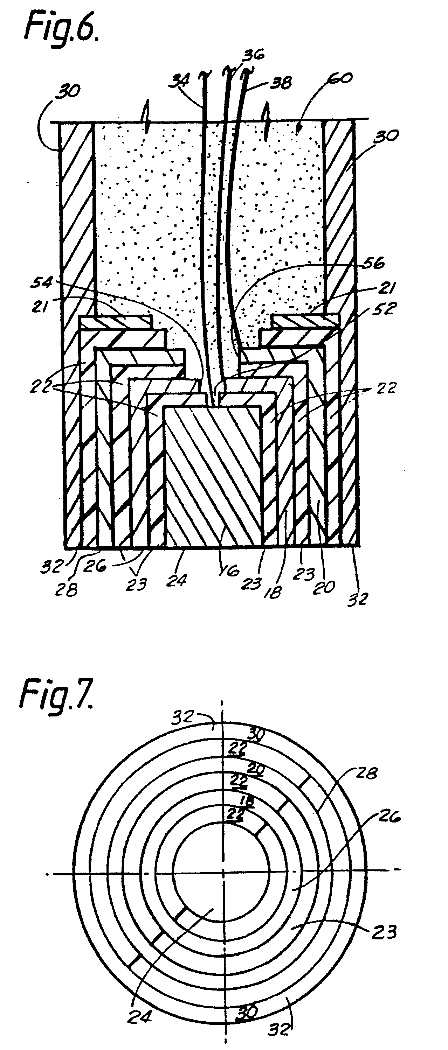

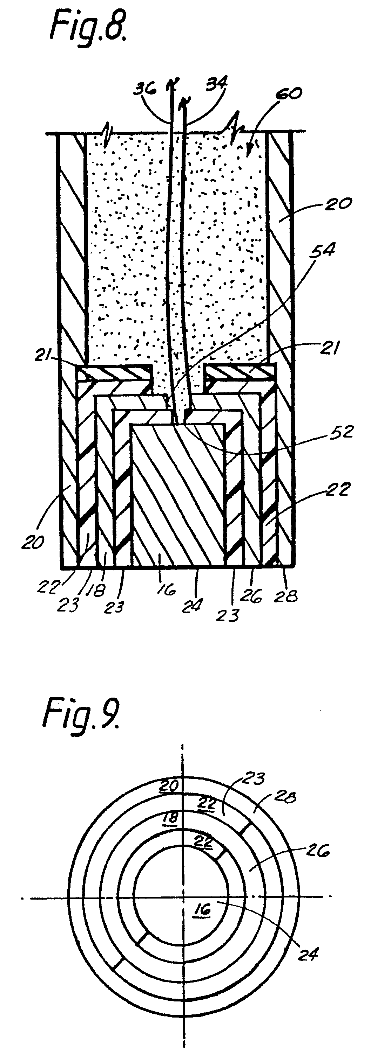

In a preferred embodiment of the corrosion probe 12 depicted in Figs. 6, 7, 8, 9, 10, and 11, working electrode 16 is shaped as a cylinder and reference electrode 18 is essentially a cylindrical ring circumferentially surrounding the working electrode 16 and concentrically positioned with respect thereto. Counter electrode 20 is also essentially a cylindrical ring that circumferentially surrounds the reference electrode 18 and is also concentrically positioned with respect to the working electrode 16 and with respect to the reference electrode 18. In the preferred embodiment of Figs. 8, 9 and 10, counter electrode 20, in addition to being an electrode, defines a sleeve and has a much greater length than the reference electrode 18 and the working electrode 16. In the preferred embodiment of Figs. 6, 7 and 11, the counter electrode 20 is approximately the same length or a little longer than reference electrode 18 and working electrode 16, and sheath 30 has a general structure defining essentially a cylindrical sleeve circumferentially surrounding the counter electrode 20 and concentrically positioned with respect to the working electrode 16, the reference electrode 18, and the counter electrode 20. A washer 21 may be positioned on top of dielectric 22 as depicted in Figs. 6 and 8.

The working electrode end 24, the reference electrode end 26, and the counter electrode end 28 are respectively structurally opposed to a working electrode opposed end 52, a reference electrode opposed end 54, and to a counter electrode opposed end 56.

The sheath end 32 is structurally opposed to a sheath opposed end 58. In Fig. 6 the reference and counter electrodes 18 and 20 are structurally disfigured such that opposed ends 54 and 56 are essentially normal with respect to the main structure of the reference and counter electrodes 18 and 20. Depending conductors 34, 36 and 38 respectively engage electrically the opposed ends 52, 54 and 56.

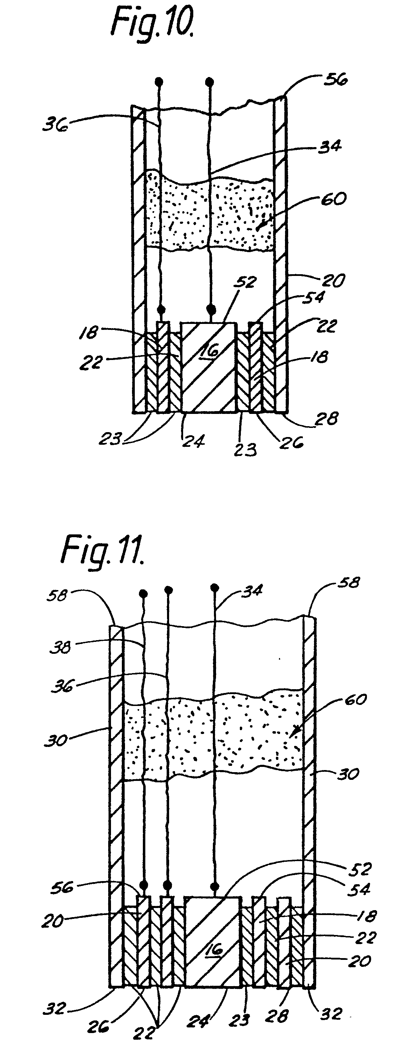

In the preferred embodiment for the corrosion probe 12 in Figs. 8, 9 and 10, opposed end 56 of counter electrode 20 is structurally disposed at a greater distance from the counter electrode end 28 than the opposed ends 54 and 52 are structurally disposed from the reference electrode end 26 and the working electrode end 24, respectively, such as to create a void space within the inner cylindrical wall of the counter electrode 20. In this embodiment, the void space may be defined as the available space from the opposed ends 52 and 54 of the working electrode 16 and the reference

**0174768**

electrode 18, respectively, and from the dielectric 22 positioned between the working electrode 16 and the reference electrode 18 and between the reference electrode 18 and counter electrode 20, up to a space extremity that generally registers with the opposed end 56 of the counter electrode 20 (see Fig. 10).

In the preferred embodiment for the corrosion probe 12 in Figs. 6, 7 and 11, sheath 30 has a greater length than the working, the reference, and the counter electrodes 16, 18 and 20 such that the sheath opposed end 58 is structurally disposed at a greater distance from the sheath end 32 than the opposed ends 52, 54 and 56 are structurally disposed from the working electrode end 24, the reference electrode end 26, and the counter electrode end 28, respectively, such as to create a void space within the inner cylindrical wall of the sheath 30. In this embodiment, this void space may be defined as the available space from the opposed ends 52, 54 and 56 of the working electrode 16, the reference electrode 18, and the counter electrode 20, respectively, and from the dielectric 22 positioned between the working electrode 16 and the reference electrode 18, and between the reference electrode 18 and the counter electrode 20, and between the counter electrode 20 and the sheath 30, up to a space extremity that generally registers with the sheath opposed end 58 of the sheath 30.

A retaining material, generally illustrated as 60, is positioned generally in each of the void spaces for the embodiments of Figs. 8, 9 and 10 and Figs. 6, 7 and 11. Depending conductors 34 and 36 extend from the opposed ends 52 and 54, respectively, through and beyond the retaining material 60; and in the preferred embodiment of Figs. 6, 7 and 11, depending conductor 38 also extends through and beyond the retaining material 60 from the counter electrode opposed end 56.

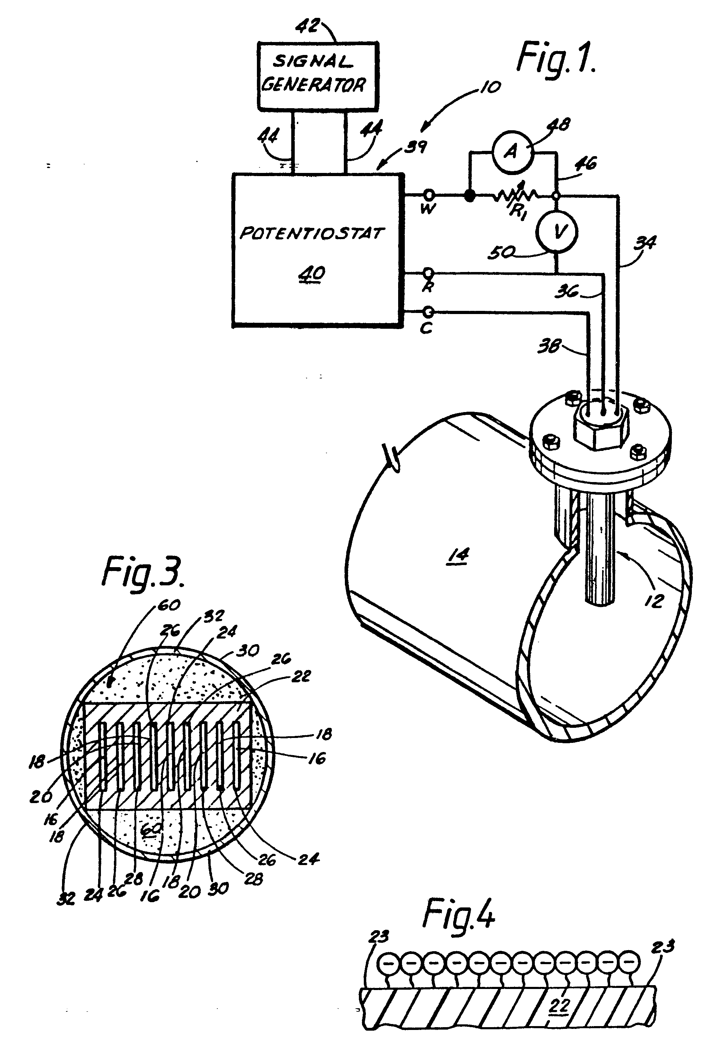

In another preferred embodiment of the corrosion probe 12 depicted in Figs. 2 and 3, working electrode 16, reference electrode 18, and counter electrode 20 are essentially rectangular plates parallelly disposed with respect to each other. While only one each of electrodes 16, 18 and 20 is needed in this invention, it is more preferred that a plurality of the electrodes 16, 18 and 20 be utilized in the following serial fashion: working electrode 16, reference electrode 18, counter electrode 20, reference electrode 18, working electrode 16, reference electrode 18, counter electrode 20, reference electrode 18 and working electrode 16. All of these electrodes are encased in the dielectric 22 illustrated in Figs. 2 and 3 and each of the electrodes ends 24, 26 and 28 of these electrodes define a rectangular edge which are parallelly postured with respect to each other and co-planar among and respect to each other and the ionically conductive dielectric surface 23 therebetween. As was the case for the preferred embodiments of Figs. 6-11, reference electrode 18 is preferably positioned between the working electrode 16 and the counter electrode 20. The plurality of depending conductors 34, 36 and 38 respectively connect to opposed ends 52, 54 and 56 extend through the dielectric 22 (see Fig.2) and unite to become unique as conductors 34, 36 and 38 in the respective cases. As also was the case for the preferred embodiments of Figs. 6-11, conductors 34, 36 and 38 extend through and beyond the retaining material 60 which also, as represented in Fig. 3, surrounds the dielectric 22 on its sides to retain the same including the implanted electrodes 16, 18 and 20 within cylindrical sleeve wall of the sheath 30.

In the preferred embodiment for the corrosion probe 12 in Figs. 6-11, working electrode 16 has a diameter of less than 0.25 inches, more preferably between about 0.01 inches to about 0.20 inches. Most preferably, the diameter of working electrode 16 is about 0.175 inches. The thickness of cylindrical reference electrode 18 and cylindrical counter electrode 20, especially including their respective cylindrical reference electrode end 26 and cylindrical counter electrode end 28, is preferably less than about 0.25 inches. More preferably, the thickness of these electrodes 18 and 20, and especially including their respective electrode ends 26 and 28, is between about 0.01 to about 0.15 inches; most preferably, the thickness is about 0.05 inches. It is understood that the thickness of electrode ends 26 and 28 may be different than the thickness of the remaining respective structure of electrode 18 and 20. The important thickness with respect to this invention is the thickness of electrode ends 26 and 28 because these are the locations of amperage and difference in potential transfer.

In the preferred embodiment for the corrosion probe 12 in Figs. 2 and 3, the width of the rectangular edges of the working electrode end 24, the reference electrode end 26, and the counter electrode end 28 is less than about 0.25 inches; more preferably between about 0.01 to about 0.15 inches; and most preferably, the width of electrode ends 24, 26 and 28 is approximately about 0.05 inches. As was the case for cylindrical electrodes 18 and 20, it is understood that the thickness or width of the rectangular edges of the electrode ends 24, 26 and 28 may be different than the thickness or width of the remaining respective structure of the generally rectangular shaped electrodes 16, 18 and 20. Again, the important thickness or width is that of the rectangular edges of the electrode ends 24, 26 and 28.

Of also importance is the width of the ionic conductive surface 23 between electrode ends 24, 26 and 28, or, stated another way, the spacing between electrode ends 24 and 26 and between electrode ends 26 and 28. For all preferred embodiments of the corrosion probe 12, the width of the ionic conductive surface 23 between all electrode ends 24, 26 and 28, or, stated the other way, the spacing between electrode ends 24 and 26 and between electrode ends 26 and 28, is preferably about 0.35 inches or less. It is obvious and not of substantial importance that the width of the ionic conductive surface 23 between all electrode ends 24, 26 and 28, or, in other terms, the spacing between electrode ends 24 and 26 and between electrode ends 26 and 28, may be different than the width of any dielectric 22 between the remaining respective structure of electrode 16, 18 and 20, or the spacing between the remaining respective structure of electrode 16 and 18 and between the remaining respective structure of electrode 18 and 20.

In a more preferred embodiment of the invention, the width of the ionic conductive surface 23 between all electrode ends, or the spacing between all electrode ends, is between about .01 inches to about .20 inches, with the most preferred being about 0.09 inches.

The working electrode 16 is fabricated of any metal, the corrosion rate of which in the corrosive liquid environment is to be determined. Preferably, working electrode 16 is made from ferrous metal such as steel. Counter electrode 20 is provided to permit the completion of a power circuit between working electrode 16 and counter electrode 20, whereby a current may be applied as follows: through the working electrode 16, over the ionic dielectric surfaces 23 between the working electrode end 24 and the reference electrode end 26, over the ionic dielectric surface 23 between the reference electrode end 26 and the counter electrode end 28, and through the counter electrode 20. While counter electrode 20 may be fabricated of any material such as a ferrous metal (e.g. steel), it is preferably inert: that is, fabricated of a material such as carbon, graphite, or platinum which undergoes no reaction under the application of an electric potential when exposed to the corrosive liquid environment. In this manner, contamination of the corrosive liquid environment with undesired reaction products is avoided. Reference electrode 18 may also be fabricated of any conductive material, but is preferably a reversible electrode in that more accurate measurements are made possible, since a fixed potential between a reference electrode end 26 and an area in a surrounding fluid means (i.e. the corrosive liquid environment such as an oil/brine mixture) in general microscopic proximity thereto is not altered by the passage of minute currents to or from the reference electrode end 26. Although steel has been proved suitable for use as a reference electrode 18 in the corrosion probe 12 of the present invention, the theory of the technique indicates that other metals and metal alloys, e.g. calomel, hydrogen, copper-copper sulfate, silver-silver chloride, and aluminum, copper, brass, lead, nickel, titanium, zirconium, chromium, and alloys thereof, may be used under similar conditions. The use of a steel reference electrode 18 is advantageous in that it permits a short test period, permits use of high temperatures and pressure, and permits the use of the most sensitive range of meter 50. In a preferred embodiment for the corrosion probe 12, working electrode 16, reference electrode 18 and counter electrode 10 are manufactured of the same material to overcome any possible difficulties normally encountered when taking potential measurements utilizing the reference electrode 18.

The sheath 30 may be fabricated of any suitable material which would be protective of the dielectric 22, the electrodes 16, 18 and 20 affixed within the dielectric 22, and the retaining material 60 which holds and retains the dielectric 22 (including the electrodes 16, 18 and 20) in place. In a preferred embodiment of the corrosion probe 12, sheath 30 is manufactured of a highly corrosive resistant material, say stainless steel or the like. In the preferred embodiments of the corrosion probe 12 depicted in Figs. 6, 7 and 11, the spacing of the sheath 30 from the counter electrode 20, or the thickness of the dielectric 22 between the sheath 30 and the counter electrode 20, may be any suitable reasonable spacing or thickness, such as between about 0.01 to about 1.00 inch. This is not critical because the surface of the dielectric 22 between the counter electrode 20 and the sheath 30, or between the counter electrode end 28 and the sheath end 32, is preferably an inactive surface and not ionically conductive such as the ionic conductive surface 23 between the electrode ends 24 and 26 and between the electrode ends 26 and 28.

Likewise, in the preferred embodiments of the corrosion probe 12 depicted in Figs. 2 and 3, the distance that any of electrodes 16, 18 and 20 are from the sheath 30 is not critical or important and may be any suitable reasonable distance, such as between about 0.1 to about 1.00 inch. The surface of the dielectric 22 from any of the electrode ends 24, 26 and 28, across the retaining material 60, to the sheath end 32 of sheath 30 is inactive and not ionically conductive such as the ionic conductive surface 23 positioned between any two contiguous electrode ends i.e. either electrode ends 24 and 26 or electrode ends 26 and 28.

The material of the dielectric 22 may be any suitable insulation, such as teflon, glass, fiber, plastic (e.g. polystyrene), resins (e.g. phenolics), fluorocarbons, or mixtures of the same, that can be made capable of supporting an ionic conductive surface 23 and withstanding high temperatures and pressure. Preferably, the dielectric 22 is a polystyrene plastic or a phenolic resin.

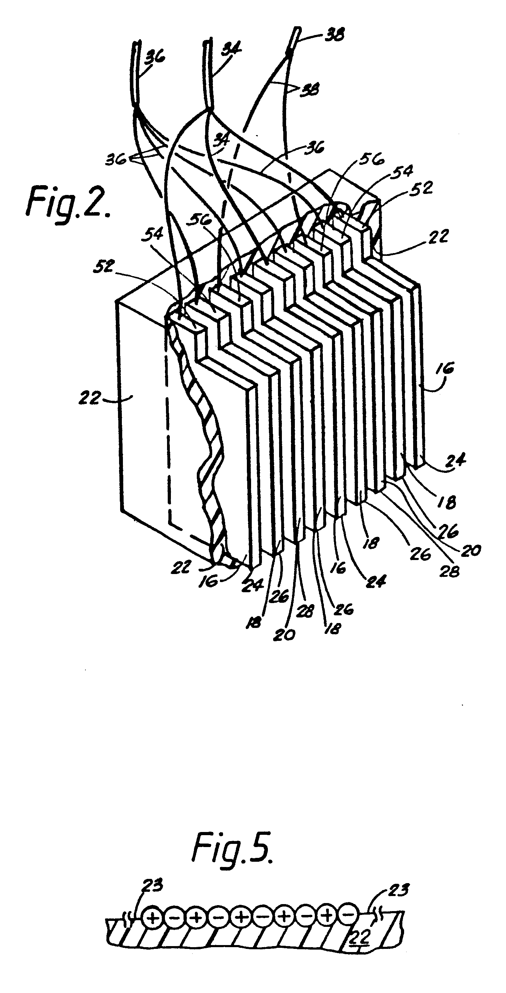

The high resistances of the dielectric 22 between all electrode ends 24, 26 and 28 are lowered by imbedding or chemically generating ionic functions on the surfaces of the dielectric 22 that separates the electrodes 16, 18 and 20, including their respective electrode ends 24,26 and 28, in order to define the ionic conductive surface 23. Fig. 4 illustrates a plurality of ionically conductive negative charged ions chemically bound to the surface of the dielectric 22; and Fig. 5 depicts a plurality of alternating negative and positive charged ions imbedded in the dielectric surface. 23.

In the preferred embodiment, the required "artificial" charge carriers are induced by chemical modification of the surface of the dielectric 22 by caustic etching (e.g. with KOH or the like) of the phenolic based resins or oxidative sulfonation of the polystyrene resins. Some epoxies naturally contain such ionically conductive charged ions and do not require any additionally chemical treatment. Chemical etching treatments function to decrease resistivity of the dielectric 22 to obtain the ionic conductive surface 23 by generating nominally a monolayer of permanently bound surface ion exchange groups and/or generating a water-wettable surface which may, or may not, have permanent surface ions, but which would absorb water and ions from the corrosive liquid environment (e.g. an oil and brine mixture).

The corrosive liquid environment in the present invention may be any corrosive liquid environment such as, but not by way of limitation, carbon dioxide-saturated brine, carbon dioxide-saturated oil/brine, ordinary brine containing mixed chlorides such as calcium and magnesium, oil well brines, water for use in secondary recovery of oil, recirculating cooling water, any hydrocarbon/brine mixture, or any corrodible liquid environment containing not only chlorides such as calcium and magnesium, but also other ions such as sulfide, ferrous, ferric, cuprous or other readily oxidized or reduced ions. The present invention is particularly suited for measuring corrosion of steel in mixtures of brine suspended in oil (as opposed to mixtures of oil suspended in brine) since no present state of the art electrochemical probes can accomplish this.

With continuing reference to the drawings for operation of the invention and the process for measuring the corrosion rates of metals, or the like, in a corrosive liquid environment, such as an brine/oil mixture, the corrosion probe 12 is initially prepared. Working electrode 16 is the sample electrode upon which the effects of the corrosive liquid environment are to be determined. The reference electrode 18, preferably reversible, maintains a fixed potential for use in measuring the potential difference of the working electrode 16 during current flow. The counter electrode 20 carries the small test currents between it and the working electrode 16. The corrosion current is computed from the current/potential profile of the working electrode 16.

The electrodes 16, 18 and 20 are positioned at a preferred spacing of about 1.5 mm or a little less than about 0.05 inches. The magnitude of the interelectrode resistance is reduced by decreasing the interelectrode spacing and/or increasing the ionic conductivity of the dielectric surface material 23 between the electrodes 16, 18 and 20. This brings the interelectrode resistance into a regime addressable by commercial AC conductivity bridges. Ohmic interelectrode resistance can therefore be measured with a Beckman Instrument Model RC-16C, battery powered conductivity bridge, or the like, operating at 1 KHz. The normal dynamic range of this AC bridge is about 0 to 1 meg ohm, with calibration via standard resistors above 0.2 meg ohm. The resistance measuring range of this Beckman Bridge, or any similar bridge, can be extended into the meg ohm region (and any potential error in measurement reduced) by use of a shunt technique as described by L. Niedrach in Journal of Electrochemical Soc. 127,2122 (1980). The high, unknown interelectrode resistance is placed in parallel with a smaller, known resistance, within the dynamic range and Rx is computed from the measurement by the standard formula for resistances in parallel. Values accurate to nominally ±10% is obtained in this manner up to 5 meg ohm.

In the preferred embodiment of Figs. 6-11, the electrode 16, 18 and 20 are manufactured, for purposes of illustrating the operation of this invention, of N80 steel comprising iron the following alloying elements in the accompanying stated % by wt. basis: Si .26, Mn 1.42, Cr 0.54, Mo 0.016, Ni 0.08, Cu 0.14, V 0.111, Sn 0.006, Al 0.02, B 0.0002, Mg 0.003, P 0.009, S 0.012, and C 0.36. The electrodes are arranged as a disc for working electrode 16 with a diameter of about 0.175 inches, and rings having a uniform thickness of about 0.05 inches for reference electrode 18 and counter electrode 20.

In the preferred embodiment of Figs. 2 and 3, the electrode 16, 18 and 20 are manufactured, for the purpose of illustrating the operation of the invention, with a low alloy steel. This low alloy steel has a corrosion rate per unit area in pure brine that is approximately three times larger than that of the N80 steel. The electrodes are arranged as parallel metal strips, as illustrated in Fig. 3, with identical electrodes connected internally in parallel. The width of these electrodes 16, 18 and 20 possessing a parallel relationship is uniform and is about 0.05 inches. In this parallel electrode design, minute droplets of the corrosive liquid environment bridging small sectors of any electrodes 16, 18 and 20 combination would produce a measurable corrosion current. There is no need for the corrosive liquid environment to bridge all of the electrode ends 24, 26 and 28 as would be necessitated for the preferred embodiment of Figs. 6-11.

Oil/brine mixtures are prepared as the corrosive liquid environment in illustrating this invention. The crude oils used to make oil/brine mixtures are: Crude A, crude B, Crude C and Crude D. Six hundred and forty (640) ml of each crude oil was combined with a predetermined desired volume (percentage) of NaCl solution in a 2-liter autoclave. The mixtures are respectively deaerated by pressurizing/depressurizing to 700 psi with argon, while stirring. The addition of $Na_2SO_3$ removed the last traces of dissolved oxygen. Since the mixtures would separate into sludge-fluid layers on cooling and after venting the carbon dioxide, the mixtures are kept warm, stirred and under $CO_2$ when not in use.

Three corrosion probes 12 are prepared for each of the three embodiments of the probe 12 using one of the following three dielectrics for each probe 12 in each embodiment: teflon, polystyrene, and phenolic-filled linen. Retaining material 60 (a cured epoxy resin) was used to retain the dielectric 22 including the implanted electrodes 16, 18 and 20 within a stainless steel sheath 30 for the preferred embodiment of Figs. 2, 3, 6, 7 and 11, and a cured epoxy resin was also used as a retaining material 60 for holding the dielectric 22 having implanted electrodes 16 and 18 within the cylindrical wall of counter electrode 20.

The surface of the dielectric 22 between electrodes 16 and 18 and between electrodes 18 and 20 for all embodiments of the corrosion probe 12 have to be ionically charged to define the ionic conductive surface 23 and lower the interelectrode resistance. The proximal disposition alone of the electrodes 16, 18 and 20 with respect to each other will not provide the necessary low interelectrode resistance in order to detect corrosion on the working electrode 16. A large number of ionic charges can be generated on the interelectrode surface of the dielectric 22 by either permanently imbedding predetermined minute sized (smaller than 200 mesh) ionic materials, such as glass, $BaSO_4$, and other insoluble, electronically insulating salts on and/or within the interelectrode surface of the dielectric 22 (see Fig. 5) in an alternating negative/positive charged ions fashion in order to increase surface ionic conductivity;

and/or by reacting the interelectrode surface of the dielectric 22 with an appropriate chemical, an etchant, in order to chemically bound a plurality of negative charged ions thereon (see Fig. 4) in order to increase surface ionic conductivity. When predetermined minute sized ionic materials are permanently imbedded on and/or within the interelectrode surface of the dielectric 22 to define the ionically conductive surface 23, the ionically conductive surface 23 must be electrostatically neutral; that is, it must have the same number of positive charges as negative charges and vice versa. Since this dielectric material 22 exist dry to start, with both of the positive and negative ionic charges must be part of the drawings, especially Fig. 5. The means for imbedding may be suitable means such as by pressure or driving the ionic materials into the interelectrode surface of the dielectric 22.

The following Table I are ohmic resistance (reference to working electrode 16) in a 15% brine in Crude B crude mixture for the two corrosion probes (Figs. 6, 7 and 11, and Figs. 2 and 3) having a phenolic resin dielectric 22, before and after immersion in various etchants:

## TABLE I

Effect of Etchants on Inter-Electrode Resistance
(phenolic resin; in 15% brine/Crude B crude, 760 psi
$CO_2$: 180°F; de-scaled in 1/1 HCl, 60°C)

| Treatment | FIGS. 6, 7 & 11 Probe (megohms) | Parallel Electrode Probe (FIGS. 2 & 3) (megohms) |
|---|---|---|
| None | > 5 | 0.05 - 1.1 |
| 10M KOH, 80°C* (60 min) | 1.9 | |
| 10M KOH, 80°C* (2 hr) | 0.3 - 0.64 | 0.003 |
| 1/1 HCl (1 min) | > 5 | |
| Conc. $H_2SO_4$ (20 min) | > 5 | |
| 75°C, $H_2SO_4/H_2O_2$ (2min) | > 5 | |
| NaCl/16% HCl, (2 min) | > 5 | |

*Electrode distorted at temperatures above 95°C.

The ohmic resistance for the corrosion probe 12 in Figs. 6, 7 and 11 measured under the indicated experimental conditions were in excess of 5 megohms. The corrosion probe 12 of Figs. 2 and 3 produces a lower resistance which was due in part to the geometrical arrangement of the counter electrodes 20. By soaking in the 10M KOH etchant at 80°C for 2 hours substantially lowered the inter-electrode resistance for both corrosion probes 12. Higher temperatures destroyed the electrodes 16, 18 and 20 of the corrosion probes 12, and shorter soaking time did not provide for persistant ionic conductive activity in order to lower the inter-electrode resistance.

Table II below list ohmic resistances (reference to working electrode 16) in a 40% brine in Crude B crude mixture for the corrosion probe 12 depicted in Figs. 6, 7 and 11 with a polystyrene dielectric 22 before and after treatment with various etchants, and shows that the oxidative sulfonation decreased inter-electrode resistance.

## TABLE II

Effect of Etchants on Polystyrene Dielectric Probe
(FIGS. 6, 7 & 11 configuration, 40% brine/Crude B crude)

| Etchant | Resistance (meg ohm) |
| --- | --- |
| None | > 5 |
| 10M KOH (2 hr, 80°C) | > 5 |
| 1/1 $H_2SO_4$ (90 min, 84°C) | > 5 |
| $H_2SO_4$/15% $H_2O_2$ (2 min, 25°C) | 0.2 |

After the corrosion probes 12 have been prepared with an ionically conductive surface 23 in order to lower the inter-electrode resistance, the resistance between the working electrode 16 and reference electrode 18 must be determined along with the difference in potential between the reference electrode 18 and an area in a surrounding corrosive liquid environment in general microscopic proximity thereto (about $10^{-6}$cm or less). A low voltage alternative current at high frequency (e.g., 0.4V at 1000 Hz) is applied to the working electrode 16 lead. This and the reference electrode 18 are also made one arm of a four arm bridge circuit, identical in concept to a standard Wheatstone Bridge. The resistance of two of the other three arms are fixed. The resistance of the third arm is adjusted until the current passing across the bridge is a minimum. The value for this adjusted resistance is directly proportional to the unknown resistance. The proportionality constant is provided by the manufacturer of the bridge and/or can be determined by direct calibration with known resistances in place of the electrochemical probe. The difference in potential between the reference electrode 18 and an area in a surrounding corrosive liquid environment in general microscopic proximity thereto (about $10^{-6}$cm. or less) is taken as that difference in potential when no current is flowing which reduces the measurement to the overvoltage necessary to perform the measurements, well known to those skilled in the art.

The corrosion probe 12 is subsequently inserted into and attached onto the pipe 14 or autoclave containing the corrosive liquid environment, which as was previously mentioned, is one of the prepared brine/oil mixtures.

A known applied current density, or a known difference in potential, is transmitted to the probe 12 by device 39. As was previously mentioned, this is preferably accomplished through the use of the potentiostat 40 and the signal generator. The known current density, or the known difference in potential, is dialed into the signal generator 42 which transmits the same to the potentiostat 40.

If a known applied current density is dialed into the signal generator 42, the potentiostat 40 transmits this current density as direct current through the depending conductor 34 including the variable resistor 46, through the working electrode 16, over the ionic dielectric surface 23 between the working electrode 16 and the counter electrode 20 and through the counter electrode 16 and back to the potentiostat 40 through depending conductor 38. It is assumed that the ohmic resistance across the surface of the reference electrode end 26 is negligible compared to that across the ionic conductive surface 23 of the dielectric 22. The variable resistor 46 may be any suitable value (e.g. .1 meg ohm to 1.5 meg ohm). The resistor 46 assists in measuring current, but is not necessary when potentiostat 40 is used. The electromotive force between the working electrode 16 and the reference electrode 18 is measured with the volt meter 50. From the known applied current density and the previously determined resistance between the working electrode 16 and the reference electrode 18, an electromotive force is found by multiplying the applied current density by the resistance. This electromotive force represents the difference in potential between an area in the corrosive liquid environment in general microscopic proximity to the

working electrode 16 (about $10^{-6}$cm or less) and an area in the corrosive liquid environment in general microscopic proximity to the reference electrode 18 (about $10^{-6}$cm or less again). The overpotential between the working electrode 16 and an area in the corrosive liquid environment in general microscopic proximity thereto (about $10^{-6}$cm or less) is subsequently calculated by subtracting from the electromotive force read by the volt meter 50, the electromotive force found by multiplying the current density by the known resistance between the working electrode 16 and the reference electrode 18 and the predetermined known difference in potential between the reference electrode 18 and the area in the corrosive liquid environment in general microscopic proximity thereto.

The corrosion current on the working electrode 16 can now be calculated from the Stern-Geary equation:

$$IA = IC \left[ 10^{\frac{-P}{BC}} - 10^{\frac{P}{BA}} \right]$$

where IA is the known applied current density; IC is the corrosion rate expressed as current density; BA and BC are the anodic and cathodic Tafel (or "beta") constants; and P is the known overpotential. The equation is applicable to any corroding system with one oxidation process (e.g. metal dissolution) and one reduction process. The Stern-Geary equation describes the behavior of activation controlled corrosion (BA and BC values usually between 30 and 200 mV), diffusion controlled corrosion (BC $=\infty$ ), or the corrosion of metals in the passive state (BA $=\infty$ ).

If only one of the two Tafel constant is known, or one is not known with sufficient accuracy, a second known applied current density is dialed into the signal generator 42 to repeat the process again to obtain a second overpotential. With two known current densities and two known overpotentials for each applied current density, two Stern-Geary equations may be solved simultaneously to obtain the one unknown Tafel constant and the corrosion rate expressed as current density.

Likewise, if two Tafel constants are not known, or not known with sufficient accuracy, a second and subsequently a third known applied current density is dialed into the signal generator 42 to repeat the entire process for each dialed in applied current density to obtain a second and a third overpotential. With three known applied current densities and three known overpotentials for each applied current density, three Stern-Geary equations may be solved simultaneously to obtain the two Tafel constants and the corrosion rate expressed as current density.

Calculating corrosion rates from electrochemical data is difficult due to the form of the Stern-Geary equation which can be solved easily by numerical methods. Because of the iterative nature of numerical methods, such analysis are most conveniently performed with a computer. Large mainframe computer systems typically contain programs and/or subroutine libraries capable of numerically solving the Stern-Geary equation.

The corrosion rate is expressed as current density and is a measure of relative corrosion rate, but if desired it can be converted to corrosion rate units by an appropriate conversion factor (microamp/cm$^2$) x factor = mils per year. The factors are listed below for various metals.

| Metal | Factor |
|---|---|
| Brass | 0.47 |
| Stainless Steel (304) | 0.43 |
| Hastelloy C | 0.39 |
| Aluminum (AA 7075) | 0.52 |
| Copper | 0.46 |
| Iron (or N80 or Low alloy steel) | 0.46 |
| Nickel | 0.42 |

If a known difference in potential is dialed into the signal generator 42, the potentiostat 40 transmits the difference in potential through the depending conductor 34 including the variable resistor 46, through the working electrode 16, over the ionic dielectric surface 23 between the working electrode 16 and the reference electrode 18, and through the reference electrode 18 and back to the potentiostat 40 through the depending conductor 36. The current density as direct current is being conducted as the result of a difference in potential through the conductor 34 including the variable resistor 46, through the working electrode 16, over the ionic dielectric surface 23 between the working electrode 16 and the counter electrode 20, and through the counter electrode 16 and back to the potentiostat 40 through the conductor 38. This current density between the working electrode 16 and counter electrode 20 is measured by the meter 48/resister 46. From the measured current density and the previously determined resistance between the working electrode 16 and the reference electrode 18, an electromotive force is found by multiplying the measured current density by the resistance, and this electromotive force represents the difference in potential between an area in the corrosive liquid environment in general microscopic proximity to the working electrode 16 (about $10^{-6}$cm or less) and an area in the corrosive liquid environment in general microscopic proximity to the reference electrode 18 (about $10^{-6}$cm or less again). The overpotential between the working electrode 16 and an area in the corrosive liquid environment in general microscopic proximity thereto (about $10^{-6}$cm or less) is subsequently calculated by subtracting from the known difference in potential that was dialed into the signal generator 42, the electromotive force found by multiplying the measured current density by the known resistance between the working electrode 16 and the reference electrode 18 and the predetermined known difference in potential between the reference electrode 18 and the area in the corrosive liquid environment in general microscopic proximity thereto.

As was the case when a known current density was signaled to the potentiostat 40 by the signal generator 40, the corrosion rate (expressed as current density) on the working electrode 16 can now be calculated from the Stern Geary equation.  Again, if only one of the two Tafel constants is known, or one is not known with sufficient accuracy, a second known difference in potential is dialed into the signal generator 42 to repeat the process again to obtain a  second overpotential with two known measured current densities and two known overpotentials for each applied difference in potential, two Stern-Geary equations may be solved simultaneously to obtain the one unknown Tafel constant and the corrosion rate expressed as current density. Likewise again, if two Tafel constants in the Stern-Geary equation are not known or not known with sufficient accuracy, a second and subsequently a third known difference in potential is dialed into the signal generator 42 to repeat the entire process again for each dialed-in known difference in potential to obtain a second and a third overpotential. With the three known measured current densities and the three known overpotentials for each applied difference in potential, three Stern-Geary equations may be solved simultaneously to obtain the two Tafel constants and the corrosion rate expressed as current density.  This corrosion rate, as was the situation for the known applied current densities that were signaled to the potentiostat 40 by the signal generator 40, is a measure of the relative corrosion rate and can be converted to common units of corrosion rate by one of the previously mentioned conversion factors, depending on the type of metal that comprises the working electrode 16.

My invention will be illustrated by the following set forth examples which are given by way of illustration and not by any limitation. All parameters such as distances, concentrations, compounds, temperature rates, times, etc., submitted in these examples are not to be construed to unduly limit the scope of my invention. The potentials and currents were respectively read with a Keithly 616 Digital Electrometer, volt meter 50, and a Keithly battery powered electrometer Model 600B, meter 48. The current readings were achieved with the resistor 46 set at 1 meg ohm. To further reduce noise so that small (of the order of 0.004 micro amps) corrosion currents could be measured, all of the electronics, pumps and the autoclave in these examples were put to a common ground. This reduced ground loop currents to nominally 0.4 micro amps in 40% brine/oil mixture. In a 2% brine/oil mixture the ground loop currents were reduced to even a smaller order of magnitude. Glass liners were used to further reduce these residual currents by a factor of nominally two. Any residual currents remaining were then nulled to zero by adjusting the output potential to zero current as read by meter 48, the Keithly electrometer. Corrosion currents in these examples were calculated from the Stern-Geary equation with a computer using a computer curve fitting procedure as described by N. Greene and R. Gandhi in Materials Perf. 21,34 (July 1982). Typical Tafel constants were BA = 70 mv/decade and BC = 110 mv/decade. These were independent of probe design as indeed they should have been, being constants related to the corrosion mechanism per se. The interelectrode resistances were a function of the particular crude, brine content, stirring rate and probe configuration, which again they should be since they are related to the arrival of brine at the electrode-mixture interface. Certain interelectrode resistances by way of illustration between the working electrode 16 and the reference electrode 20 were as follows:

| Mixture | Resistances (Meg ohm) | |
| --- | --- | --- |
| | Ring/Disc Probe (Figs. 6-11) | Parallel Electrode (Figs. 2 & 3) |
| Crude A | 1.0 | 0.14 |
| Crude A + 2% Brine | 0.65 | 0.11 |
| Crude B | 0.83 | 0.04 |
| Crude B + 2% Brine | 0.005 | 0.004 |
| Crude B + 15% Brine | 0.2 | * |
| Crude B + 40% Brine | 0.21 | 0.04 |
| Crude C + .2% Brine | 1.0 | .14 |
| Crude C + 2% Brine | .65 | .112 |
| Crude C + 5% Brine | .256 | .027 |
| Crude C + 10% Brine | .28 | .0018 |
| Crude C + 15% Brine | .24 | .0054 |
| Crude C + 20% Brine | .292 | .022 |
| Crude D | .825 | .06 |
| Crude D + 2% Brine | .249 | .053 |
| Crude D + 5% Brine | .0057 | * |

* Not measured

The predetermined difference in potential between reference electrode 18 and an area in the surrounding corrosive liquid in general microscopic proximity thereto were taken to be that potential measured at zero current flow, as was previously mentioned. The predetermined difference in potential by way of illustration for certain particular crudes and certain crude/brine mixtures for the various embodiments of the probe 12 were as follows:

| Mixtures | Difference in Potential (Volts) | |
| --- | --- | --- |
| | Ring/Disc Probe (Figs. 6-11) | Parallel Electrode (Figs. 2 & 3) |
| Crude B + 40% Brine | * | -.0140 |
| Crude C + 0.2% Brine | +0.1136 | -.01308 |
| Crude C + 2% Brine | + .0750 | -.0414 |
| Crude C + 5% Brine | + .0683 | -.0368 |
| Crude C + 10% Brine | + .0220 | -.0104 |
| Crude C + 15% Brine | - .01370 | -.00738 |
| Crude C + 20% Brine | + .0125 | -.0291 |
| Crude D | + .0403 | -.01322 |
| Crude D + 2 % Brine | + .0195 | -.0032 |
| Crude D + 5% Brine | + .01463 | * |

* Not measured

High pressure measurements in these following examples were made in a standard Autoclave Engineering 2-liter, 316 stainless steel autoclave. Electrode probes were passed through the autoclave lid with standard swagelok fittings to within 1 3/8" of the autoclave base. Pressure was monitored with an Autoclave Engineering digital meter with a solid state sensor, Model T 5106-05-B10. The $CO_2$ pressure was held at $760\pm20$ psig. Temperature control was via an Autoclave Engineering temperature controller "Solid State Controller #520." This particular unit cycled between $192^\circ$F and $174^\circ$F over a nominally 90 minute period when set for $185^\circ$F. This had a negligible effect on corrosion rate. Measurements of the corrosion rate parameter were at $186^\circ \pm3^\circ$F. This variation was reduced to about half by manual adjustment of the power to the heater while successive measurements were being made.

## EXAMPLE I

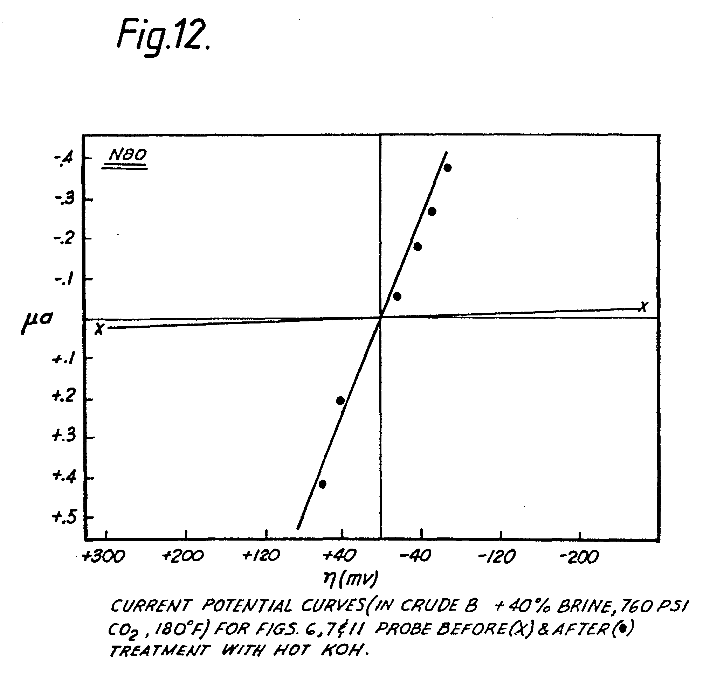

Current-potential curves measured in the 40% brine in Crude B crude are shown in Fig. 12 for the probe 12 embodiment of Figs. 6, 7 and 11, before and after activation with 10M KOH, 80°C (2 hrs.). The measured current (microamps) for before and after activation were -0.002 and -0.1, respectfully at e.m.f. (volts) between reference electrode 18 and the working electrode 16 for before and after activation of -0.732 and -.401, respectfully. The resistance (megohms) between reference electrode 18 and working electrode 16 in each case was 0.8 and .095, respectfully. The e.m.f. (volts) between the reference electrode 18 and a point in the crude in the immediate vicinity of the reference electrode 18 were -0.266 for before activation and -0.017 for after activation. The corrosion currents calculated were .0002 ua and 0.25 ua before and after activation, respectively. Clearly, the treatment with KOH generated a current response to the brine/oil mixture.

## EXAMPLE II

Corrosion currents were measured with the KOH treated parallel electrode probe 12 (the embodiment of Figs. 2 and 3) in Crude B crude oil that was deliberately made more corrosive by adding brine, increasing temperature and increasing carbon dioxide pressure. The following Table III shows that the Figs. 2 and 3 probe 12 responds to increasing corrosivity of brine/oil mixtures:

## TABLE III

### Corrosion Currents Measured with Parallel Electrode Probe*
### (30 minutes after admitting $CO_2$ to probe 12)

| Liquid | Temp. | $CO_2$ Pressure (psig) | Corrosion Current (micro amp) | Applied Current (micro amp) | Measured e.m.f. (volts) between R and W | Determined e.m.f. (volts) between R and pt in liquid |
|---|---|---|---|---|---|---|
| Crude B + 40% Brine | 75°F | 15 | .0008 | -.02 | -.590 | -.540 |
| | 150°F | 15 | .02 | -.02 | -.130 | -.024 |
| | 185°F | 15 | .12 | +.20 | +.0321 | +.035 |
| | 185°F | 775 | .53 | +.20 | +.016 | +.008 |
| Pure Brine | 185°F | 775 | 206. | +98 | +0055 | +010 |

*Sheets in sequence

R - W - C - W - R - W - C - W - R  (where R = reference,  W = Electrode,  C = counter).

All like electrodes are electrically in parallel.

The oil/40% brine mixtures increase in corrosivity with increasing $CO_2$ pressure and/or brine cut and/or temperature. The measured corrosion current increases as the corrosivity of the mixture increases.

## EXAMPLE III

Example II was repeated but with Crude D and with a KOH treated probe 12 having the embodiment of Figs. 6, 7 and 11 and the results found are in the following Table IV:

## TABLE IV

### Corrosion Currents Measured with Figs. 6, 7 and 11 Probe

| Liquid | Temp. | $CO_2$ Pressure (psig) | Applied Current (micro amp) | Measured e.m.f. (volts) between R and W | Determined e.m.f. (volts) between R and pt. in liquid | Corrosion Current (micro amp) |
|---|---|---|---|---|---|---|
| Crude D as received | 185°F | 760 | +.01 | -.0232 | +.00885 | .023 |
| Crude D/brine mixture 2% brine | | 760 | +.02 | +.0323 | +.00782 | .053 |
| 5% brine | | 760 | -.2 | +.01780 | -.0153 | .30 |

EXAMPLE IV

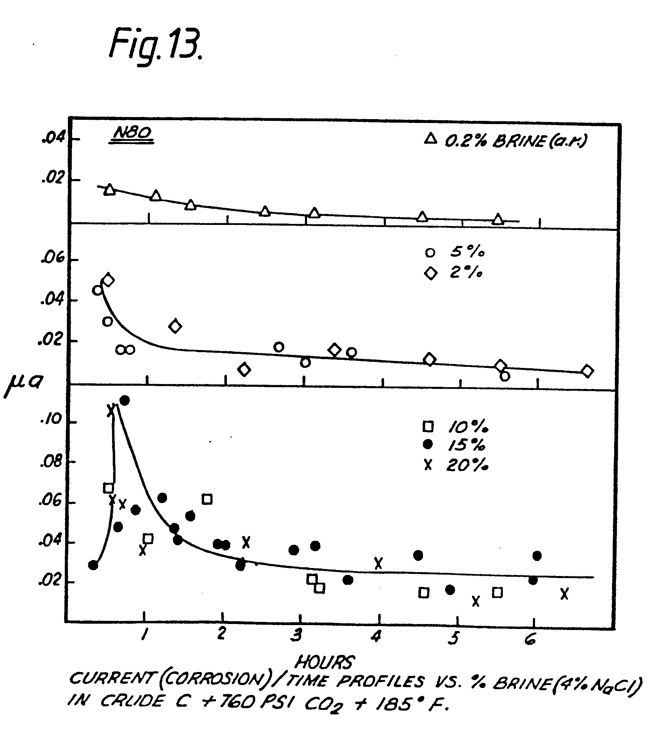

Corrosion current-time profiles for N80 steel at different quantities of the 4 percent (%) brine in Crude C .crude are shown in Fig. 13, measured with the probe 12 embodiment of Figs. 6, 7 and 11 in the autoclave at nominally 760 psi $CO_2$, 182°F under the following conditions:

| Liquid | Applied current (ua) | Measured e.m.f. (volts) between R and W | Determined e.m.f. (volts) between R and pt. in liquid | $I_C$ (corrosion current ua) |
|---|---|---|---|---|
| Crude C + 0.2% Brine | -.01 | +.0919 | -.0336 | .006 |
| Crude C + 2% Brine | -.006 | +.0639 | -.0069 | .018 |
| Crude C + 5% Brine | -.01 | +.1627 | -.00554 | .037 |
| Crude C + 10% Brine | -.002 | +.01176 | -.00064 | .035 |
| Crude C + 15% Brine | -.02 | -.0257 | -.00724 | .058 |
| Crude C + 20% Brine | -.04 | -.0227 | -.019 | .044 |

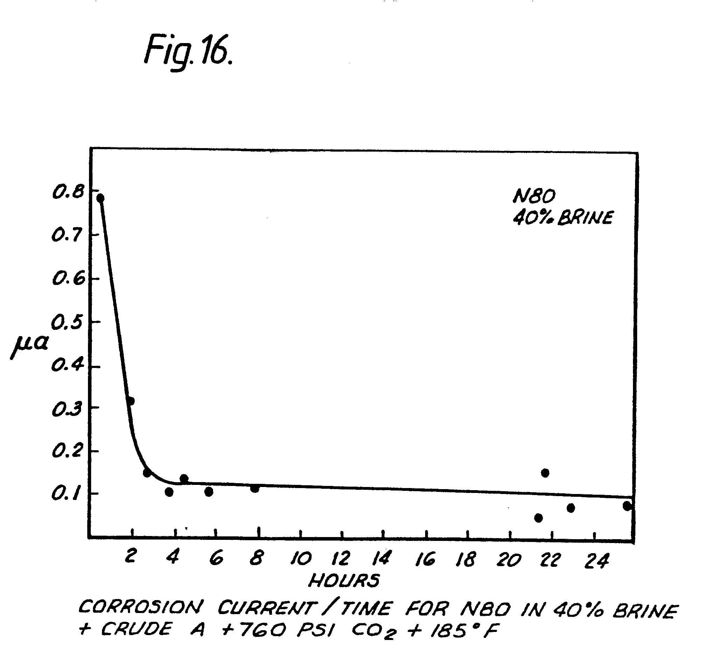

In all cases there generally appears to be a more rapid corrosion process at the beginning, dropping off with time to a lower steady-state rate. The same conclusion is found in Fig. 16 with the conventional coupon weight-loss technique, for example, at 5 hours, the data for Crude B + 40% Brine + 760 psi $CO_2$ + 185°F with an applied current (ua) of 0.1, a measured e.m.f. (volts) between R and W of -.331, a determined e.m.f. (volts) between R and a pt. in liquid of .007. In both cases the steel surface of the working electrode 16 was coated with $FeCO_3$. The corrosion currents at about 5 to 10 hours, after initiation of $CO_2$ induced corrosion at 760 psi $CO_2$ and 185°F, are a weak function of brine count, as also evidenced in Table IV.

## EXAMPLE V

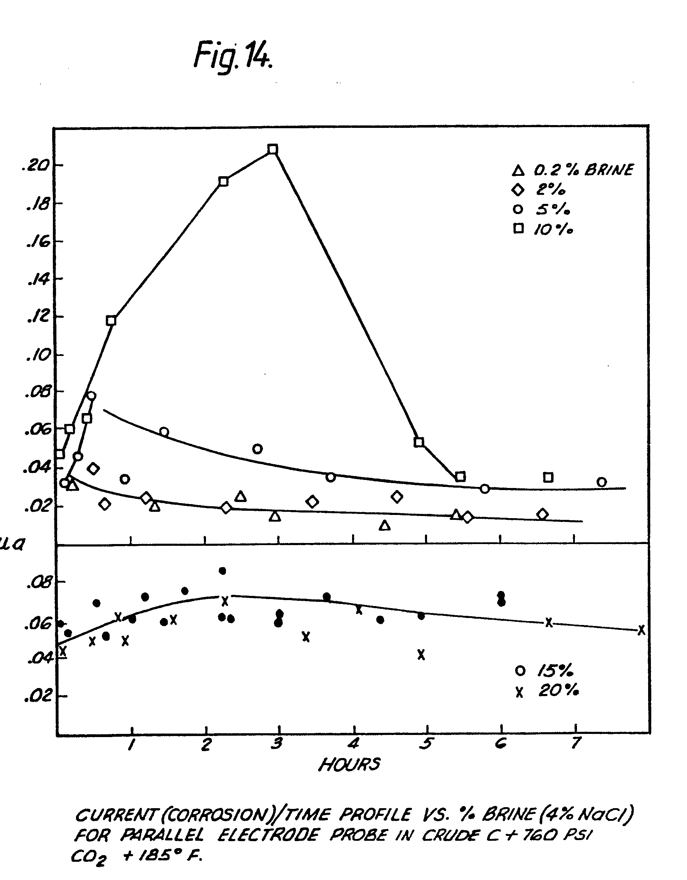

Corrosion current-time profiles for the low alloy steel at different quantities of the 4 percent (%) brine in Crude C crude are shown in Fig. 14, measured with the probe 12 embodiment of Figs. 2 and 3 in the autoclave at nominally 760 psi $CO_2$, 185°F under the following conditions:

| Liquid | Applied current (ua) | Measured e.m.f. (volts) between R and W | Determined e.m.f. (volts) between R and pt in liquid | $I_c$ (corrosion current ua) |
|--------|--------|--------|--------|--------|
| Crude C + .2% Brine | -.01 | -.0219 | -.0077 | .027 |
| Crude C + 2% Brine | -.01 | -.0430 | -.006 | .035 |
| Crude C + 5% Brine | -.01 | -.0354 | -.0044 | .047 |
| Crude C + 10% Brine | -.01 | -.01740 | -.00345 | .06 |
| Crude C + 15% Brine | -.01 | -.0316 | -.00383 | .054 |
| Crude C + 20% Brine | -.01 | -.0349 | -.00479 | .044 |

There again appears to be a rapid corrosion process at the beginning followed by a slower corrosion process.

## EXAMPLE VI

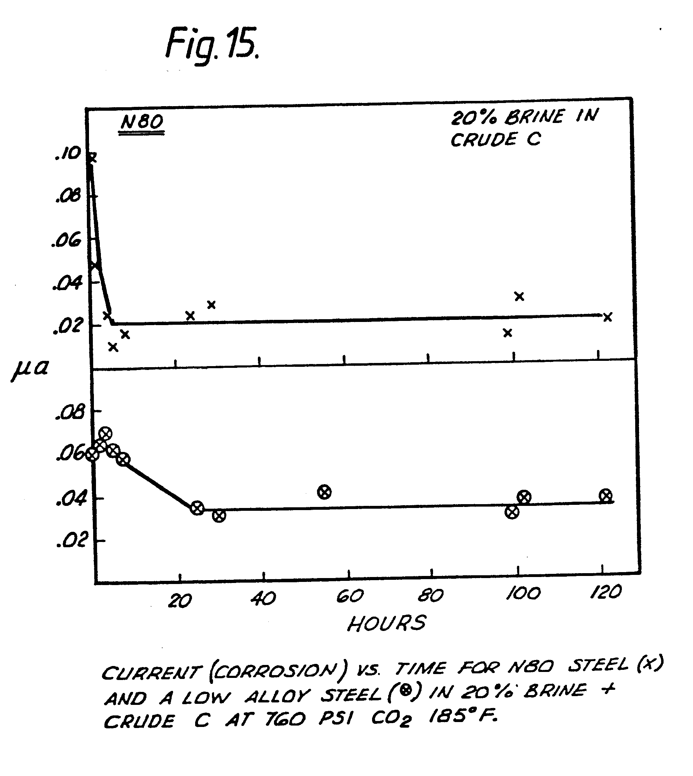

A corrosion current-time profile for N80 steel in 40% brine in Crude B crude is shown in Fig. 15, measured with the probe 12 embodiment of Fig. 6, 7 and 11 in the autoclave at nominally 760 psi $CO_2$, 185°F. The data at 22 hours was calculated from an applied current (ua) of +.1, a measured e.m.f. (volts) between R and W of -0.289, a determined e.m.f. (volts) between R and pt. in liquid of +.009. Again, there was rapid corrosion initially, followed by passivation to a slower steady-state corrosion rate.

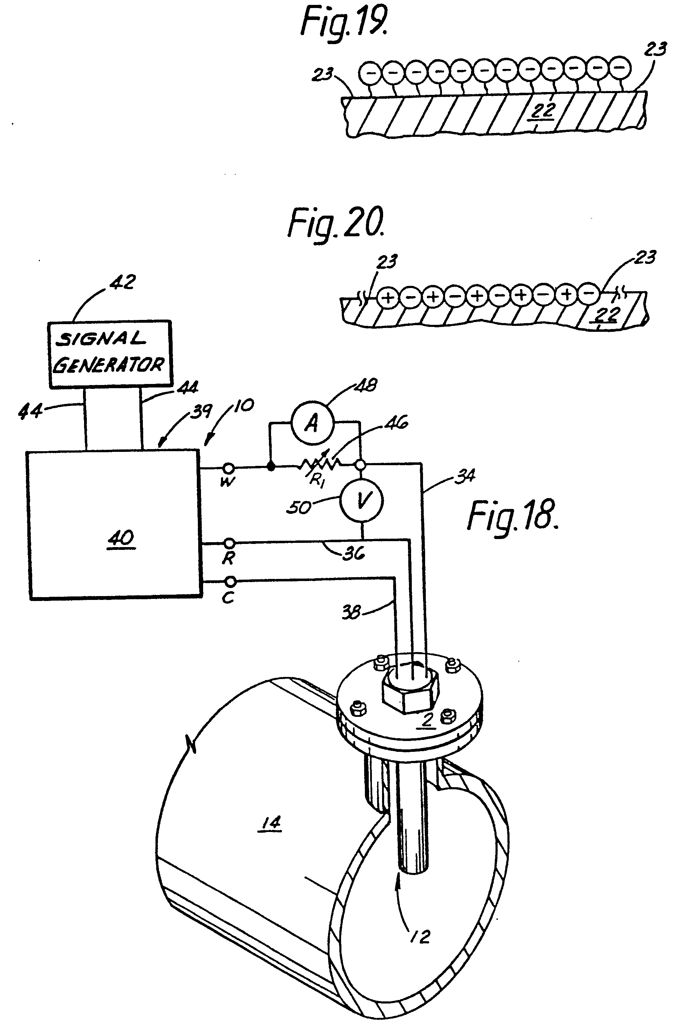

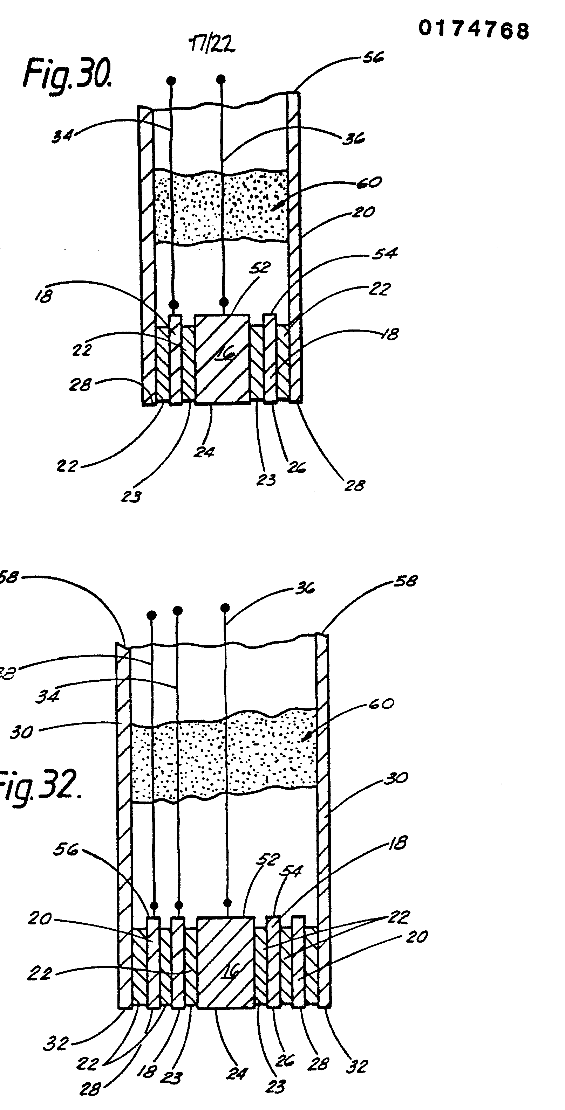

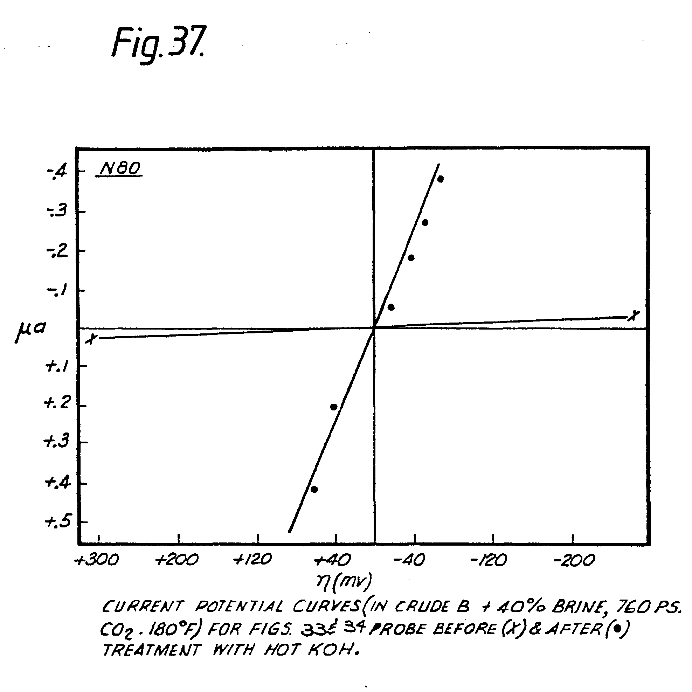

Referring in detail now to the drawings, wherein entirely only of FIGS. 18-39 similar parts of the invention are represented by like reference numerals, there is seen an apparatus, generally illustrated as 10, for measuring the corrosion rate of metals, or the like, in a corrosive liquid environment, such as a hydrocarbon/brine mixture. The apparatus 10 comprises a corrosion probe, generally illustrated as 12, which is inserted into the corrosive liquid environment contained within a pipe 14, an autoclave 15, or the like.

One embodiment of the corrosion probe 12 includes a reference electrode 16, a working electrode 18, and a counter electrode 20. An insulation means or dielectric 22 is positioned between the reference electrodes 16 and the working electrode 18 and between the working electrode 18 and the counter electrode 20. The dielectric 22 between the reference electrode 16 and the working electrode 18 has an ionically conductive electronically insulating surface 23. The dielectric 22 between the working electrode 18 and the counter electrode 20 does not have or have to have, the ionically conductive surface 23. The working electrode 18 is positioned preferably between the reference electrode 16 and the counter electrode 20. The reference electrode 16, the working electrode 18, and the counter electrode 20 terminate into a reference electrode end 24, a working electrode end 26, and a counter electrode end 28, respectively. The reference electrode end 24 and the working electrode end 26 are essentially in a co-planar relationship among and with respect to each other. The counter electrode end 28 does not have to be co-planar with respect to the reference electrode end 24, but preferably, counter electrode end 28 is co-planar with respect to reference electrode end 24 and the working electrode end 26.

The ionically conductive surface 23 of the dielectric 22 between the reference electrode end 24 and the working electrode end 26 is also preferably in a co-planar relationship among and with respect to the reference electrode end 24 and the working electrode end 26. The corrosion probe 12 may additionally comprise a sheath 30 that terminates into a sheath end 32. The dielectric 22, preferably without the ionically conductive surface 23, may also be positioned between the counter electrode 20 and the sheath 30. The sheath end 32 and the dielectric 22 between the counter electrode 20 and the sheath 30 are preferably, but not necessarily, also co-planar respect to the counter electrode end 28, the reference electrode end 24, the working electrode end 26, and the ionically conductive surface 23 between the reference electrode end 24 and the working electrode end 26.

Depending conductors 36, 34 and 38 attach electrically to the reference electrode 16, the working electrode 18, and the counter electrode 20, respectively, and interconnect electrically the corrosion probe 12 with a device, generally illustrated as 39, which is capable of delivering or transmitting to the probe 12, a constant voltage or a constant current. Preferably, device 39 comprises a potentiostat 40, which is conventional in design and a signal generator 42, which is also conventional in design. Signal generator 42 engages electrically the potentiostat 40 via conductors 44-44 for instructing or signaling a predetermined known amperage, or a predetermined known difference in potential, to the potentiostat 40 which transmits the same to the corrosion probe 12 through one or more of the conductors 34, 36, and 38, as will be explained hereafter.

Variable resistor 46 is connected in series within conductor 34. Meter 48 is electrically attached across resistor 46 to measure the current through conductor 34 by measuring the voltage drop across resistor 46, and volt meter 50 interconnects conductors 34 and 36 to measure the difference in potential between these two conductors.

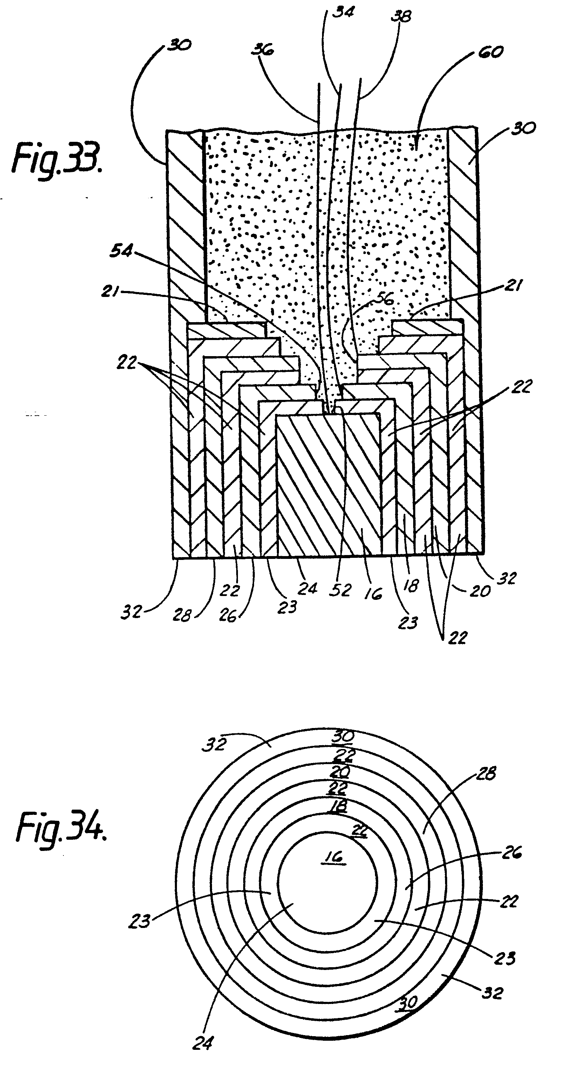

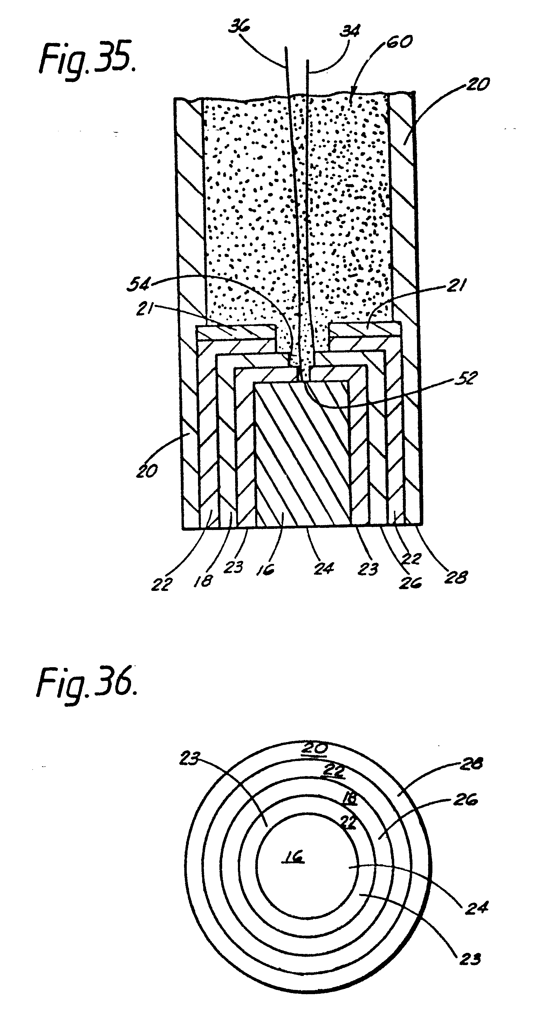

In a preferred embodiment of the corrosion probe 12 depicted in Figs. 31, 32, 33, 34, 35, and 36, reference electrode 16 is shaped as a cylinder and working electrode 18 is essentially a cylindrical ring circumferentially surrounding the reference electrode 16 and concentrically positioned with respect thereto. Counter electrode 20 is also essentially a cylindrical ring that circumferentially surrounds the working electrode 18 and is also concentrically positioned with respect to the reference electrode 16 and with respect to the working electrode 18. In the preferred embodiment of Figs. 31, 35 and 36, counter electrode 20, in addition to being an electrode, defines a sleeve and has a much greater length than the working electrode 18 and the reference electrode 16. In the preferred embodiment of Figs. 32, 33 and 34, the counter electrode 20 is approximately the same length or a little longer than working electrode 18 and reference electrode 16, and sheath 30 has a general structure defining essentially a cylindrical sleeve circumferentially surrounding the counter electrode 20 and concentrically positioned with respect to the reference electrode 16, the working electrode 18, and the counter electrode 20. A washer 21 may be positioned on top of dielectric 22 as depicted in Figs. 33 and 35. It should be understood that for this embodiment of my corrosion probe 12 and for the purposes thereof, my corrosion probe 12 would function just as effectively if the counter electrode 20 was in the position of the reference electrode 16 and shaped and dimensioned accordingly, and if the reference electrode 16 was in the position of the counter electrode 20 and also shaped and dimensioned accordingly.

The reference electrode end 24, the working electrode end 26, and the counter electrode end 28 are respectively structurally opposed to a reference electrode opposed end 52, a working electrode opposed end 54, and to a counter electrode opposed end 56.

The sheath end 32 is structurally opposed to a sheath opposed end 58. In Fig. 33 the working and counter electrodes 18 and 20 are structurally disfigured such that opposed ends 54 and 56 are essentially normal with respect to the main structure of the reference and counter electrodes 18 and 20. Depending conductors 36, 34, and 38, respectively, engage electrically the opposed ends 52, 54, and 56.

In the preferred embodiment for the corrosion probe 12 in Figs. 31, 35, and 36, opposed end 56 of counter electrode 20 is structurally disposed at a greater distance from the counter electrode end 28 than the opposed ends 54 and 52 are structurally disposed from the working electrode end 26 and the reference electrode end 24, respectively, such as to create a void space within the inner cylindrical wall of the counter electrode 20. In this embodiment, the void space may be defined as the available space from the opposed ends 52 and 54 of the reference electrode 16 and the working electrode 18, respectively, and from the dielectric 22 positioned between the reference electrode 16 and the working electrode 18 and between the working electrode 18 and counter electrode 20, up to a space extremity that generally registers with the opposed end 56 of the counter electrode 20 (see Figs. 31 and 35).

In the preferred embodiment for the corrosion probe 12 in Figs. 32, 33, and 34, sheath 30 has a greater length than the reference, the working, and the counter electrodes 16, 18, and 20, such that the sheath opposed end 58 is structurally disposed at a greater distance from the sheath end 32 than the opposed ends 52, 54, and 56, are structurally disposed from the reference electrode end 24, the working electrode end 26, and the counter electrode end 28, respectively, such as to create a void space within the inner cylindrical wall of the sheath 30. In this embodiment, this void space may be defined as the available space from the opposed ends 52, 54, and 56, of the reference electrode 16, the working electrode 18, and the counter electrode 20, respectively, and from the dielectric 22 positioned between the reference electrode 16 and the working electrode 18, and between the working electrode 18 and the counter electrode 20, and between the counter electrode 20 and the sheath 30, up to a space extremity that generally registers with the sheath opposed end 58 of the sheath 30.

A retaining material, generally illustrated as 60, is positioned generally in each of the void spaces for the embodiments of Figs. 31, 35 and 36, and Figs. 32, 33, and 34. Depending conductors 36 and 34 extend from the opposed ends 52 and 54, respectively, through and beyond the retaining material 60; and in the preferred embodiment of Figs. 32, 33, and 34, depending conductor 38 also extends through and beyond the retaining material 60 from the counter electrode opposed end 56.

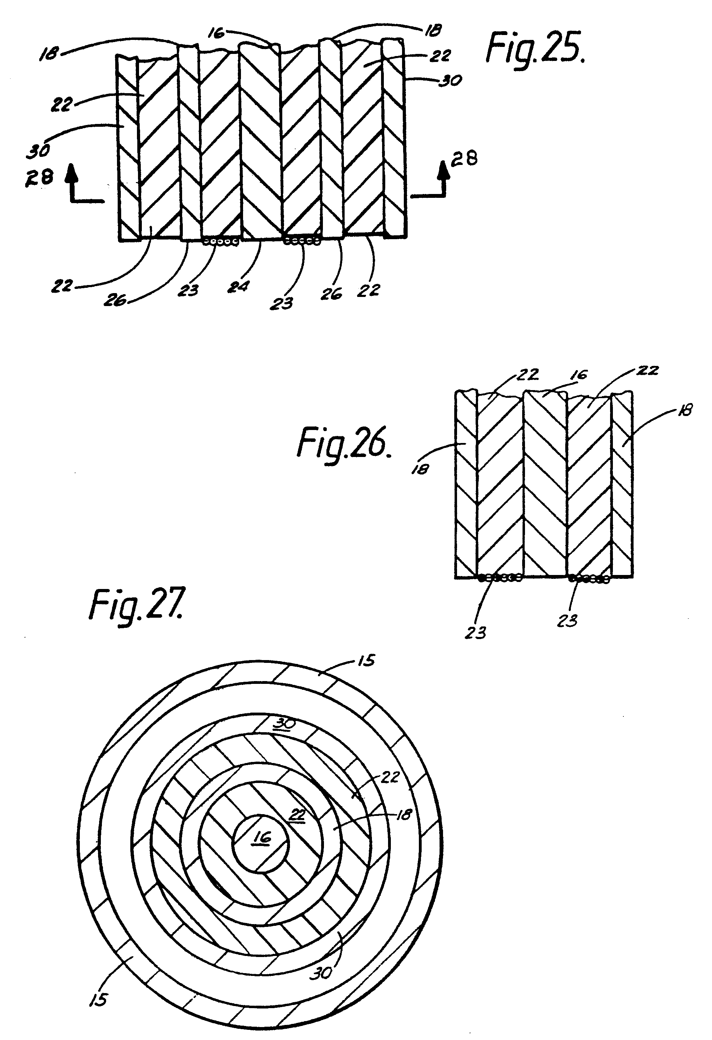

In another preferred embodiment of the invention, the corrosion probe 12 depicted in Figs. 25- 30, includes only reference electrode 16 and working electrode 18 with the dielectric 22 therebetween having the ionically conductive dielectric surface 23. In addition to the reference electrode 16, the working electrode 18, and the dielectric 22 with dielectric surface 23 therebetween, corrosion probe 12 of this embodiment of the invention may include a sheath 30 that terminate into a sheath end 32 (see Figs.25, 28, 29, and 30). The dielectric 22 or any similar matter or material without the ionically conductive surface 23 may be positioned between the working electrode 18 and the sheath 30. The reference electrode 16 and the working electrode 18 terminate into the reference electrode end 24 and the working electrode end 26, respectively.

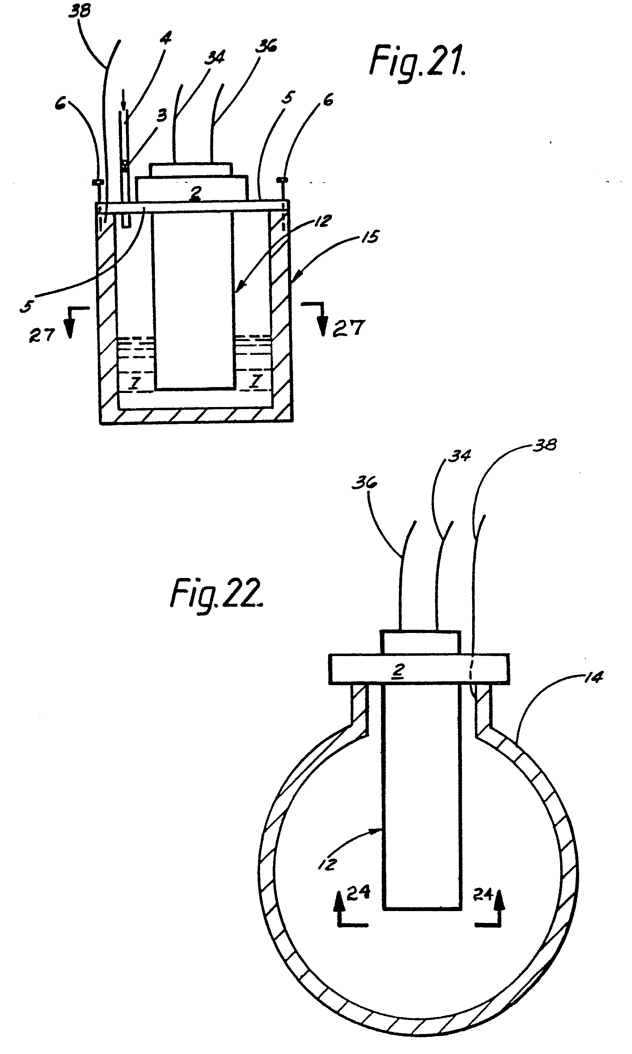

In this embodiment of the invention, counter electrode 20 is not needed, but is replaced with another current conductive means that has to be in contact with the corrosive liquid environment. Current conductive means may be any suitable means that is capable of conducting electricity emanating from the corrosive liquid environment, including but not limited to, as illustrated in Figs. 21 and 22, the side of the autoclave 15 having a corrosive liquid 7, or the side of the pipe 14 which transports the corrosive liquid environment. Current conductive means may be manufactured or constructed of any material that is conductive of electricity such as iron, iron alloy, steel, steel alloys, or copper, copper alloys, etc.

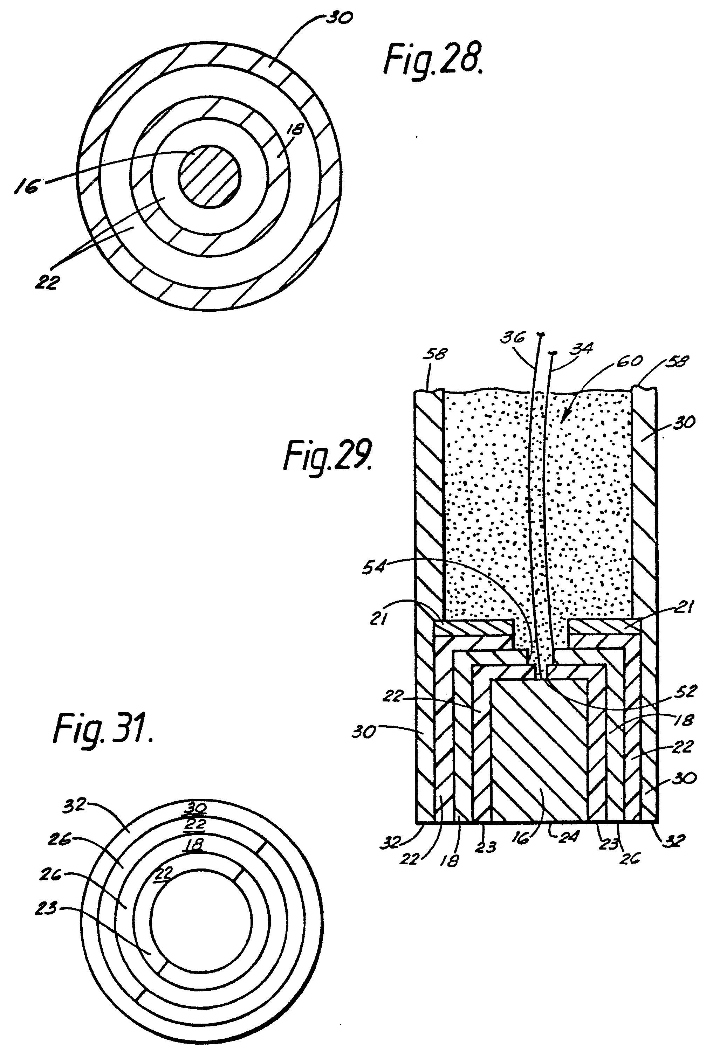

The depending conductors 36 and 34, respectively, connect to opposed ends 52 and 54, and the depending conductor 38 attaches to the current conductive means, which in Fig. 21 is the side of the autoclave 15 and in Fig.20 is side of the pipe 14. With respect to this embodiment of the invention, electrode 16 is shaped as a cylinder and working electrode 18 is essentially a cylindrical ring circumferentially surrounding the reference electrode 16 and concentrically positioned with respect thereto. Working electrode 18, in addition to being an electrode, defines a sleeve and has a much greater length than the reference electrode 16. In the preferred embodiment of Figs. 27, 28, 29, and 30, the working electrode 18 is approximately the same length or a little longer than the reference electrode 16, and sheath 30 has a general structure defining essentially a cylindrical sleeve circumferentially surrounding the working electrode 18 and concentrically positioned with respect to the reference electrode 16 and the working electrode 18. A washer 21 may be positioned on top of dielectric 22 as depicted in Fig. 29.

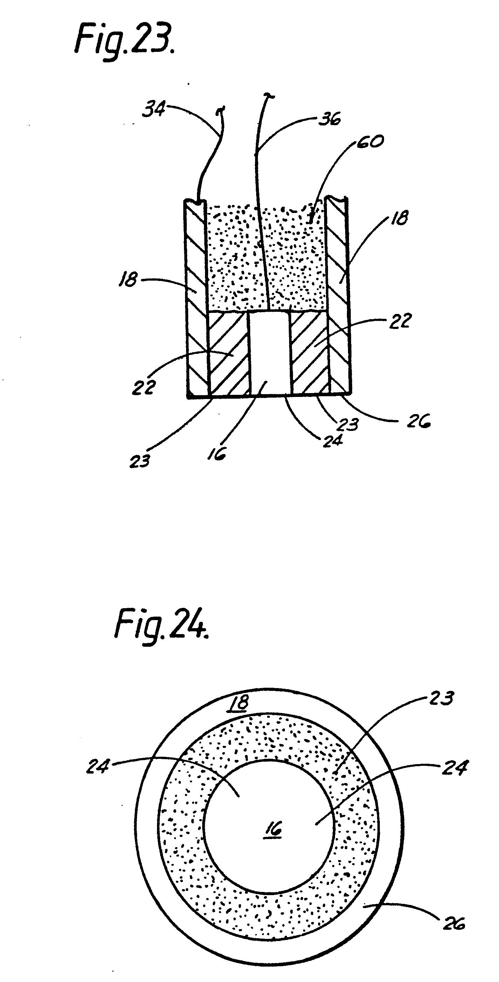

Sheath 30 has a greater length than the reference electrode 16 and the working electrode 18 such that the sheath opposed end 58 is structurally disposed a greater distance from the sheath end 32 than the opposed ends 52 and 54 are structurally disposed from the reference electrode end 24 and the working electrode end 26, respectively, such as to create a void space within the inner cylindrical wall of the sheath 30. In this embodiment, this void space may be defined as the available space from the opposed ends 52 and 54 of the reference electrode 16 and the working electrode 18, respectively, and from the dielectric 22 positioned between the reference electrode 16 and between the working electrode 18 and the sheath 30, up to a space extremity that generally registers with the sheath opposed end 58 of the sheath 30. The retaining material 60 is positioned generally in the void spaces within the walls of the working electrode 18 for the embodiment of Figs. 23, 24, 26, and 29; and within the walls of the sheath 30 for the embodiment of Figs. 25, 27, and 28. Depending conductor 36 extends from the opposed end 52 through and beyond the retaining material 60 in the embodiment of Figs. 23, 24, and 26; and depending conductors 36 and 34 in the embodiment of Figs. 25, 27, and 28, extend from the opposed ends 52 and 54, respectively, through and beyond the retaining material 60.

In the preferred embodiment for the corrosion probe 12 in Figs. 31 - 31, reference electrode 16 has a diameter of less than 0.25 inches, more preferably between about 0.01 inches to about 0.20 inches. Most preferably, the diameter of reference electrode 16 is about 0.175 inches. The thickness of cylindrical working electrode 18 and cylindrical counter electrode 20, especially including their respective cylindrical working electrode end 26 and cylindrical counter electrode end 28, is preferably less than about 0.25 inches. More preferably, the thickness of these electrodes 18 and 20, and especially including their respective electrode ends 26 and 28, is between about 0.01 to about 0.15 inches; most preferably, the thickness is about 0.02 inches. It is understood that the thickness of electrode ends 26 and 28 may be different than the thickness of the remaining respective structure of electrode 18 and 20. The important thickness with respect to this invention is the thickness of electrode ends 26 and 28 because these are the locations of amperage and difference in potential transfer.

In the preferred embodiment for my corrosion probe 12 in Figs. 23 - 30, the reference electrode 16 also has a diameter of less than 0.25 inches, more preferably between about 0.01 inches to about .20 inches as was seen for the corrosion probe 12 embodiment in Figs. 31 - 36. Most preferably, the diameter of the reference electrode 16 in Figs. 6 - 13 is about 0.175 inches. The thickness of cylindrical working electrode 18, including its cylindrical working electrode end 26, is preferably less than about 0.25 inches. More preferably, the thickness of electrode 18, and especially including its respective electrode end 26, is between about 0.01 to about 0.15 inches; most preferably, the thickness is about 0.02 inches. As was the case for the corrosion probe 12 embodiment of Figs. 23- 30, it is to be understood that the thickness of the electrode end 26 may be different than the thickness of the remaining respective structure of electrode 18. For this embodiment of the corrosion probe 12, the important thickness with respect to this invention is the thickness of electrode end 26 because this is the location of amperage and difference in potential transfer.

The autoclave 15 in Fig.21 has a top 5 that is bolted by bolt 6 to the top of the side wall of the autoclave 15. Conduit 4 with valve 3 is for dispensing a corrosive liquid 7 (i.e., hydrocarbon fluid plus gas) into the autoclave 15. Fitting 2 removably secures the corrosion probe 12 through the top 5 and into the inside of autoclave such that the end of the corrosion probe 12 contacts the corrosive liquid 7. In Figs.18 and22, fitting 2 removably attaches the corrosion probe 12 to and through the top of the pipe 14 which transports corrosive liquid(s).

Of also importance is the width of the ionic conductive surface 23 between electrode ends 24 and 26 or, stated another way, the spacing between electrode ends 24 and 26. For all preferred embodiments of the corrosion probe 12, the width of the ionic conductive surface 23 between electrode ends 24 and 26, or, stated the other way, the spacing between electrode ends 24 and 26, is preferably about 0.35 inches or less. It is obvious and not of substantial importance that the width of the ionic conductive surface 23 between electrode ends 24 and 26, or, in other terms, the spacing between electrode ends 24 and 26, may be different than the width of any dielectric 22 between the remaining respective structure of electrodes 16 and 18, or the spacing between the remaining respective

-52-

structure of electrode 16 and 18. In a more preferred embodiment of the invention, the width of the ionic conductive surface 23 between the electrode ends 24 and 26 or the spacing between the electrode ends 24 and 26, is between about .01 inches to about .20 inches, with the most preferred being about 0.02 inches.

The dielectric 22 between the working electrode 18 and the counter electrode 20 does not have the ionic conductive surface 23 and the distance and/or space between the working electrode 18 and the counter electrode 20 depends on a number of variable factors, such as the amount of power that can be transmitted to the corrosion probe 12 from the device 39 (or the potentiostat 40), the conductivity of the corrosive liquid, etc. As a matter of economics, the distance and/or space between the working electrode 20 would be any suitable distance and/or space that would be the most cost effective with respect to the manufacturing of the corrosion probe 12, such as by way of example, but not limitation, preferably no more than 0.5 inch.

The distance between the working electrode 18 and the conductive means (e.g., the side wall of the autoclave 15 or the side of the pipe 14) that replaces the counter electrode 20 also more especially depends on the previously mentioned number of variable factors, such as the amount of power that can be transmitted to the corrosion probe 12 and the conductivity of the corrosive liquid, etc. On this embodiment of the invention, there is no counter electrode 20 and economics could therefore not be one of the controlling forces as it is in the case where the probe 12 includes the counter electrode 12. For this embodiment of my invention where the corrosion probe 12 comprises reference electrode 16 and working electrode 18; or

-53-

reference electrode 16, working electrode 18 and sheath 30; the distance and/or space between the working electrode 18 and the conductive means would be any suitable distance and/or space that would be reasonable and whereby current may be conducted from the working electrode 18, through the corrosive liquid and the conductive means. Obviously, the farther the distance is between the working electrode 18 and the conductive means, the greater the chance for inaccuracies in measurements to surface. As a matter of convenience, I prefer that the distance and/or space between the working electrode and the conductive means be preferably less than about 1 foot.

The working electrode 18 is fabricated of any metal, the corrosion rate of which in the corrosive liquid environment is to be determined. Preferably, working electrode 18 is made from ferrous metal such as steel. Counter electrode 20 (or conductive means) is provided to permit the completion of a power circuit between working electrode 18 and counter electrode 20 (or conductive means), whereby a current may be applied as follows: through the working electrode 18, through the corrosive liquid environment, and through the counter electrode 20 (or through the conductive means). While counter electrode 20 (or the conductive means) may be fabricated of any material such as a ferrous metal (e.g., steel), it is preferably inert; that is, fabricated of a material such as carbon, graphite, or platinum which undergoes no reaction under the application of an electric potential when exposed to the corrosive liquid environment. In this manner, contamination of the corrosive liquid environment with undesired reaction products is avoided.

Reference electrode 16 may also be fabricated of any conductive material, but is preferably a reversible

-54-

electrode in that more accurate measurements are made possible, since a fixed potential between a reference electrode end 24 and an area in a surrounding fluid means (i.e., the corrosive liquid environment such as an oil/brine mixture) in general microscopic proximity thereto is not altered by the passage of minute currents to or from the reference electrode end 24. Although steel has been proved suitable for use as a reference electrode 16 in the corrosion probe 12 of the present invention, the theory of the technique indicates that other metals and metal alloys, e.g., calomel, hydrogen, copper-copper sulfate, silver-silver chloride, and aluminum, copper, brass, lead, nickel, titanium, zirconium, chromium, and alloys thereof, may be used under similar conditions. The use of a steel reference electrode 16 is advantageous in that it permits a short test period, permits the use of high temperatures and pressure, and permits the use of the most sensitive range of meter 50. In a preferred embodiment for the corrosion probe 12, reference electrode 16, working electrode 18 and counter electrode 20 are manufactured of the same material to overcome any possible difficulties normally encountered when taking potential measurements utilizing the reference electrode 16.

The sheath 30 may be fabricated of any suitable material which would be protective of the dielectric 22, the electrodes 16, 18, and 20, or the electrodes 16 and 18, affixed within the dielectric 22, and the retaining material 60 which holds and retains the dielectric 22 (including the electrodes 16, 18, and 20, or the electrode 16 and 18) in place. In all preferred embodiments of the corrosion probe 12, sheath 30 is manufactured of a highly corrosive resistant material, say stainless steel or the like.

In the preferred embodiments of the corrosion probe 12 depicted in Figs. 32, 33, and 34, the spacing of the sheath 30 from the counter electrode 20, or the thickness of the dielectric 22 between the sheath 30 and the counter electrode 20, may be any suitable reasonable spacing or thickness, such as between about 0.01 to about 1.00 inch. This is not critical because the surface of the dielectric 22 between the counter electrode 20 and the sheath 30, or between the counter electrode end 28 and the sheath end 32, is preferably an inactive surface and not ionically conductive such as the ionic conductive surface 23 between the electrode ends 24 and 26. There is no need for the surface of the dielectric 22 between the counter electrode 20 and the sheath 30 to be ionically conductive. Likewise, in the preferred embodiments of the corrosion probe 12 depicted in Figs. 25, 27, 28, 29, and 30, the distance that any of electrodes 16, 18 are from the sheath 30 is not critical or important and may be any suitable reasonable distance, such as between about 0.1 to about 1.00 inch. The surface of the dielectric 22 from any of the electrode ends 24 and 26 across the retaining material 60, to the sheath end 32 of sheath 30 is inactive and not ionically conductive such as the ionic conductive surface 23 positioned between the two contiguous electrode ends (i.e. between electrode ends 24 and 26).

The material of the dielectric 22 may be any suitable insulation, such as teflon, glass, fiber, plastic (e.g., polystyrene), resins (e.g., phenolics), fluorocarbons, or mixtures of the same, that can be made capable of supporting an ionic conductive surface 23 and withstanding high temperatures and pressures. Preferably, the dielectric 22 is a polystyrene plastic or a phenolic resin.

The high resistance of the dielectric 22 between all electrode ends 24 and 26 are lowered by imbedding or chemically generating ionic functions on the surface of the dielectric 22 that separates the electrode ends 24 and 26 in order to define the ionic conductive surface 23. Figs. [19] and 25 illustrate a plurality of ionically conductive negative charged ions chemically bound to the surface of the dielectric 22; and Figs. [20] and 26 depict a plurality of alternating negative and positive charged ions imbedded in the dielectric surface 23.

In the preferred embodiment, the required "artificial" charge carriers are induced by chemical modification of the surface of the dielectric 22 by caustic etching (e.g., with KOH or the like) of the phenolic based resins or oxidative sulfonation of the polystyrene resins. Some epoxies naturally contain such ionically conductive charged ions and do not require any additionally chemical treatment. Chemical etching treatments function to decrease resistivity of the dielectric 22 to obtain the ionic conductive surface 23 by generating nominally a monolayer of permanently bound surface ion exchange groups and/or generating a water-wettable surface which may, or may not, have permanent surface ions, but which would absorb water and ions from the corrosive liquid environment (e.g., an oil and brine mixture).

The corrosive liquid environment in the present invention may be any corrosive liquid environment such as, but not by way of limitation, carbon dioxide-saturated brine, carbon dioxide-saturated oil/brine, ordinary brine containing mixed chlorides such as calcium and magnesium, oil well brines, water for use in secondary recovery of oil, recirculating cooling water, any hydrocarbon/brine mixture, or any corrodible liquid environment containing not only chlorides such as calcium and magnesium, but also other ions such as sulfide, ferrous, ferric, cuprous or other readily oxidized or reduced ions. The present invention is particularly suited for measuring corrosion of steel in mixtures of brine suspended in oil (as opposed to mixtures of oil suspended in brine) since no present state of the art electrochemical probes can accomplish this.

With continuing reference to the drawings for operation of the invention and the process for measuring the corrosion rates of metals, or the like, in a corrosive liquid environment, such as a brine/oil mixture, the corrosion probe 12 is initially prepared. Working electrode 18 is the sample electrode upon which the effects of the corrosive liquid environment are to be determined. The reference electrode 16, preferably reversible, maintains a fixed potential for use in measuring the potential difference of the working electrode 16 during current flow. The counter electrode 20, or the current conductive means, carries the small test currents between it and the working electrode 18. The corrosion current is computed from the current/potential profile of the working electrode.

The electrodes 16, 18, and 20, and electrodes 16 and 18 for the embodiment of Figs. 23- 30, are positioned at a preferred spacing of about 1.5 mm or a little less than about 0.05 inches. The magnitude of the resistance between the reference electrode 16 and the working electrode 18 is reduced by decreasing the interelectrode spacing and/or increasing the ionic conductivity of the dielectric surface material 23 between the electrodes 16 and 18. This brings the interelectrode resistance into a regime addressable by commercial AC conductivity bridges. Ohmic interelectrode resistance can therefore be measured with a Beckman Instrument Model RC-16C, battery powered conductivity bridge, or the like, operating at 1 KHz. The normal dynamic

0174768

range of this AC bridge is about 0 to 1 meg ohm, with calibration via standard resistors above 0.2 meg ohm. The resistance measuring range of this Beckman Bridge, or any similar bridge, can be extended into the meg ohm region (and any potential error in measurement reduced) by use of a shunt technique as described by L. Niedrach in Journal of Electrochemical Soc. 127,2122 (1980). The high, unknown interelectrode resistance is placed in parallel with a smaller, known resistance, within the dynamic range and Rx is computed from the measurement by the standard formula for resistances in parallel. Values accurate to nominally 10% is obtained in this manner up to 5 meg ohm.

In the preferred embodiment of Figs. 31 - 36, the electrodes 16, 18, and 20, are manufactured, for purposes of illustrating the operation of this invention, of N80 steel comprising iron and the following alloying elements in the accompanying stated % by wt. basis: Si .26, Mn 1.42, Cr 0.54, Mo 0.016, Ni 0.08, Cu 0.14, V 0.111, Sn 0.006, Al 0.02, B 0.0002, Mg 0.003, P 0.009, S 0.012, and C 0.36. The electrodes are arranged as a cylindrical disc for reference electrode 16 with a diameter of about 0.175 inches, and rings having a uniform thickness of about 0.05 inches for working electrode 18 and counter electrode 20.

In the preferred embodiment of Figs. 23, 24, 25, 26 27, 28, 29, and 30, the electrodes 16 and 18 are also manufactured, for purposes of illustration, of N80 steel. The electrodes are also arranged such that the reference electrode 16 is a cylindrical disc with a diameter of about 0.175 inches, and the working electrode 18 is a ring having a uniform thickness of about 0.05 inches.

Oil/brine mixtures are prepared as the corrosive liquid environment in illustrating this invention. The crude oils used to make oil/brine mixtures are:  Crude A, Crude B, Crude C, Crude D and Crude E.  Six hundred and forty (640) ml of each crude oil was combined with a predetermined desired volume (percentage) of NaCl solution in a 2-liter autoclave.  The mixtures are respectively deaerated by pressurizing/depressurizing to 700 psi with argon, while stirring.  The addition of $Na_2So_3$ removed the last traces of dissolved oxygen.  Since the mixtures would separate into sludge-fluid layers on cooling and after venting the carbon dioxide, the mixtures are kept warm, stirred and under $CO_2$ when not in use.

Three corrosion probes 12 are prepared for each of the embodiments of the probe 12 using one of the following three dielectrics for each probe 12 in each embodiment: teflon, polystyrene, and phenolic-filled linen.  Retaining material 60 (a cured epoxy resin) was used to retain the dielectric 22, including the implanted electrodes 16, 18, and 20, and electrodes 16 and 18 in Figs. 25 27, 29, and 30, within a stainless steel sheath 30.  A cured epoxy resin was also used as a retaining material 60 for holding the dielectric 22 having implanted electrodes 16 and 18 within the cylindrical wall of counter electrode 20 for Figs. 31, 35 and 36.  For the embodiment of the corrosion probe 12 in Figs. 25, 24, and 26, the cured epoxy resin was further used as the retaining material 60 for holding the dielectric 22 having the implanted electrode 16 within the cylindrical wall of the working electrode 18.

The surface of the dielectric 22 between electrodes 16 and 18 for all embodiments of the corrosion probe 12 has to be ionically charged to define the ionic conductive surface 23 and lower the interelectrode resistance.  The surface of the dielectric 22 between electrodes 18 and 20 does not have to be ionically charged. - -

The proximal disposition alone of the electrodes 16 and 18 (including their electrode ends 24 and 26) with respect to each other will not provide the necessary low interelectrode resistance in order to detect corrosion on the working electrode 18. A large number of ionic charges can be generated on the interelectrode surface of the dielectric 22 between electrode ends 24 and 26 by either permanently imbedding predetermined minute-sized (smaller than 200 mesh) ionic materials, such as glass, $BaSO_4$, and other insoluble, electronically insulating salts on and/or within the interelectrode surface of the dielectric 22 (see Figs. 20 and 26) in an alternating negative/positive charged ions fashion in order to increase surface ionic conductivity; and/or by reacting the interelectrode surface of the dielectric 22 between the electrode ends 24 and 26 of reference electrode 16 and working electrode 18, respectively, with an appropriate chemical, an etchant, in order to chemically bound a plurality of negative charged ions thereon (see Figs. 19 and 25) in order to increase surface ionic conductivity. When predetermined minute sized ionic materials are permanently imbedded on and/or within the interelectrode surface of the dielectric 22 to define the ionically conductive surface 23, the ionically conductive surface 23 must be electrostatically neutral; that is, it must have the same number of positive charges as negative charges and vice versa. The means for imbedding may be any suitable means, such as by pressure or driving the ionic materials into the interelectrode surface of the dielectric 22 between reference electrode 16 and working electrode 18.

The following Table I are ohmic resistance (reference to working electrode 18) in a 15% brine in Crude B crude mixture for the two corrosion probes (Figs. 33 and 34, and Figs. 29 and 30) having a phenolic resin dielectric 22, before and after immersion in various etchants:

0174768

-61-

<u>TABLE I</u>

Effect of Etchants on Inter-Electrode Resistance
(phenolic resin; in 15% brine/Crude B crude, 760 psi
$CO_2$: 180°F; de-scaled in 1/1 HCl, 60°C)

| Treatment | FIGS. 33 & 34 Probe (megohms) | FIGS. 39 & 40 Probe (megohms) |
|---|---|---|
| None | >5 | >5 |
| 10M KOH, 80°C* (60 min) | 1.9 | 1.9 |
| 10M KOH, 80°C* (2 hr) | 0.3 - 0.64 | 0.3 - 0.64 |
| 1/1 HCl (1 min) | >5 | >5 |
| Conc. $H_2SO_4$ (20 min) | >5 | >5 |
| 75°C, $H_2SO_4/H_2O_2$ (2 min) | >5 | >5 |
| NaCl/16% HCl, (2 min) | >5 | >5 |

*Electrode distorted at temperatures above 95°C.

The ohmic resistance for the corrosion probe 12 in Figs. 33 and 34 & Figs. 39. and 40 measured under the indicated experimental conditions were in excess of 5 megohms. Soaking in the 10M KOH etchant at 80°C. for 2 hours substantially lowered the interelectrode resistance or the dielectric surface 22 between electrodes 16 and 18 for both corrosion probes 12. Higher temperatures destroyed the electrodes of the corrosion probes 12, and shorter soaking time did not provide for persistant ionic conductive activity in order to lower the interelectrode resistance.

Table II below list ohmic resistances (reference to working electrode 18) in a 40% brine in Crude B crude mixture for the corrosion probe 12 depicted in Figs. 33 and 34 with a polystyrene dielectric 22 before and after treatment with various etchants, and shows that the oxidative sulfonation decreased interelectrode resistance.

0174768

-62-

## TABLE II

**Effect of Etchants on Polystyrene Dielectric Probe**
(FIGS. 33 and 36 configuration, 40% brine/Crude B crude)

| Etchant | Resistance (meg ohm) |
| --- | --- |
| None | >5 |
| 10M KOH (2 hr, 80°C) | >5 |
| 1/1 $H_2SO_4$ (90 min, 84°C) | >5 |
| $H_2SO_4$/15% $H_2O_2$ (2 min, 25°C) | 0.2 |

After the corrosion probes 12 have been prepared with an ionically conductive surface 23 in order to lower the inter-electrode resistance, the difference in potential between the reference electrode 16 and an area in a surrounding corrosive liquid environment in general microscopic proximity thereto (about $10^{-6}$cm or less) must be determined. The difference in potential between the reference electrode 16 and an area in a surrounding corrosive liquid environment in general microscopic proximity thereto (about $10^{-6}$cm or less) is taken as that difference in potential when no current is flowing, which reduces the measurement to the overvoltage necessary to perform the measurements, well known to those skilled in the art.

The corrosion probe 12 is subsequently inserted into and attached by fitting 2 onto the pipe 14 or autoclave 15 containing the corrosive liquid environment 7, which as was previously mentioned, is one of the prepared brine/oil mixtures.

A known applied current density, or a known difference in potential, is transmitted to the probe 12 by device 39. As was previously mentioned, this is preferably accomplished through the use of the potentiostat 40 and the signal generator. The known current density, or the known difference in potential, is dialed into the signal generator 42 which transmits the same to the potentiostat 40.

If a known applied current density is dialed into the signal generator 42, the potentiostat 40 transmits this current density as direct current through the depending conductor 34 including the variable resistor 46, through the working electrode 18, through the corrosive liquid environment, and through the counter electrode 20 (or through the conductive means) and back to the potentiostat 40 through depending conductor 38.

In the embodiment of FIGS. 1-17 it was assumed that the ohmic resistance across the surface of the reference electrode end                                    is negligible compared to that across the ionic conductive surface 23 of the dielectric 22. However, the ohmic resistance across the surface of the reference electrode end does effect the current flow, and my new probe 12 overcomes this problem since the current flows through the corrosive liquid environment and not over the surface of the reference electrode end 26.

The variable resistor 46 may be any suitable value (e.g., .1 meg ohm to 1 meg ohm). The resistor 46 assists in measuring current, but is not necessary when potentiostat 40 is used. The electromotive force between the reference electrode 16 and the working electrode 18 is measured with the volt meter 50.

In the embodiment of FIGS. 1-17, from the known applied current density and the previously determined resistance between the working electrode and the reference electrode, an electromotive force is found by multiplying the applied current density by the resistance. This electromotive force represents the difference in potential between an area in the corrosive liquid environment in general microscopic proximity to the working electrode 18 (about $10^{-6}$ cm or less) and an area in the corrosive liquid environment in general microscopic proximity to the reference electrode 16 (about $10^{-6}$ cm or less again). This step, along with determining the resistance between the reference electrode 16 and the working electrode 18, may now be omitted with my new probe 12.

The overpotential between the working electrode 18 and an area in the corrosive liquid environment in general microscopic proximity thereto (about $10^{-6}$ cm or less) is subsequently calculated by subtracting from the electromotive force read by the volt meter 50, the predetermined known difference in potential between the reference electrode 16 and the area in the corrosive liquid environment in general microscopic proximity thereto.

The corrosion current on the working electrode 18 can now be calculated from the Stern-Geary equation:

$$I_A = I_C \left[10^{\frac{-P}{BC}} - 10^{\frac{P}{BA}}\right]$$

where IA is the known or measured applied current density; IC is the corrosion rate expressed as current density; BA and BC are the anodic and cathodic Tafel (or "beta") constants; and P is the known or measured overpotential. The equation is applicable to any corroding system with one oxidation process (e.g., metal dissolution) and one reduction process. The Stern-Geary equation describes the behavior of activation controlled corrosion (BA and BC values usually between 30 and 200 mv), diffusion controlled corrosion (BC = ∞), or the corrosion of metals in the passive state BA = ∞).

If only one of the two Tafel constants is known, or one is not known with sufficient accuracy, a second known applied current density is dialed into the signal generator 42 to repeat the process again to obtain a second overpotential. With two known current densities and two known overpotentials for each applied current density, two Stern-Geary equations may be solved simultaneously to obtain the one unknown Tafel constant and the corrosion rate expressed as current density.

Likewise, if two Tafel constants are not known, or not known with sufficient accuracy, a second and subsequently a third known applied current density is dialed into the signal generator 42 to repeat the entire process for each dialed in applied current density to obtain a second and a third overpotential. With three known applied current densities and three known overpotentials for each applied current density, three Stern-Geary equations may be solved simultaneously to obtain the two Tafel constants and the corrosion rate expressed as current density.

Calculating corrosion rates from electrochemical data is difficult due to the form of the Stern-Geary equation which can be solved easily by numerical methods. Because of the iterative nature of numerical methods, such analysis are most conveniently performed with a computer. Large mainframe computer systems typically contain programs and/or subroutine libraries capable of numerically solving the Stern-Geary equation.

The corrosion rate is expressed as current density and is a measure of relative corrosion rate, but if desired, it can be converted to corrosion rate units by an appropriate conversion factor (microamp/$cm^2$) x factor = mils per year. The factors are listed below for various metals.

| Metal | Factor |
|-------|--------|
| Brass | 0.47 |
| Stainless Steel (304) | 0.43 |
| Hastelloy C | 0.39 |
| Aluminum (AA 7075) | 0.52 |
| Copper | 0.46 |
| Iron (or N80 or Low alloy steel) | 0.46 |
| Nickel | 0.42 |

If a known difference in potential is dialed into the signal generator 42, the potentiostat 40 transmits the difference in potential through the depending conductor 34 including the variable resistor 46, through the working electrode 18, over the ionic dielectric surface 23 between the working electrode 18 and the reference electrode 16, and through the reference electrode 16 and back to the potentiostat 40 through the depending conductor 36. As a result of this difference in potential, a current density (as direct current) is being conducted through the conductor 34 including the variable resistor 46, through the working electrode 18, and through the counter electrode 20 or the current conductive means (e.g., the side of the autoclave 15), and back to the potentiostat 40 through the conductor 38. In the embodiment of FIGS. 1-22, the reference electrode is positioned between the working electrode and the counter electrode and all dielectric surfaces between the working and counter electrode is an ionic dielectric surface 23 in order to conduct the current density from the working electrode, over the dielectric surfaces between the working and counter electrode including the surface of the reference electrode and, to the counter electrode. In a preferred embodiment of my present corrosion probe 12 in Figs. 31-36 there is no dielectric surface 23 between the working electrode 18 and the counter electrode 20. The current density can not be conducted over any ionic dielectric surface 23 between the working electrode 18 and the counter electrode 20. With the corrosion probe 12 of my present invention, the current density between the working electrode 18 and the counter electrode 20 (or the current conductive means) is being conducted through the corrosive liquid environment, as was previously mentioned, and is measured by the meter 48. This measured current density is IA in the Stern-Geary equation.

The overpotential between the working electrode 18 and an area in the corrosive liquid environment in general microscopic proximity thereto (about $10^{-6}$cm or less) is subsequently calculated by subtracting from the known difference in potential that was dialed into the signal generator 42 as measured by volt meter 50, the predetermined known difference in potential between the reference electrode 16 and the area in the corrosive liquid environment in general microscopic proximity thereto, as was also measured by volt meter 50. This calculated overpotential is P in the Stern-Geary equation.

As was the case when a known current density was signaled to the potentiostat 40 by the signal generator 42, with P (the overpotential), IA (the measured current density) and two known Tafel constants, the corrosion rate (expressed as current density) on the working electrode 18 can now be calculated from the Stern-Geary equation.

Again, if only one of the two Tafel constants is known, or one is not known with sufficient accuracy, a second known difference in potential is dialed into the signal generator 42 to repeat the process again to obtain a second overpotential. With two known measured current densities and two known overpotentials for each applied difference in potential, two Stern-Geary equations may be solved simultaneously to obtain the one unknown Tafel constant and the corrosion rate expressed as current density.

Likewise again, if two Tafel constants in the Stern-Geary equation are not known, or not known with sufficient accuracy, a second and subsequently a third known difference in potential is dialed into the signal generator 42 to repeat the entire process again for each dialed-in known difference in potential to obtain a second and a third overpotential. With the three known measured current densities and the three known overpotentials for each applied difference in potential, three Stern-Geary equations may be solved simultaneously to obtain the two Tafel constants and the corrosion rate expressed as current density. This corrosion rate, as was the situation for the known applied current densities that were signaled to the potentiostat 40 by the signal generator 40, is a measure of the relative corrosion rate and can be converted to common units of corrosion rate by one of the previously mentioned conversion factors, depending on the type of metal that comprises the working electrode 18.

It is important to understand that for the preferred embodiment of my corrosion probe 12 in Figs. 31 - 36, if the counter electrode 20 and the reference electrode 16 are interchanged with each other and the dielectric surface 23 is between the working electrode 18 and the outside reference electrode 16, my corrosion probe 12 would achieve the same results and generally function identically with the preferred embodiment of the corrosion probe 12 having the reference electrode 16 concentrically positioned with respect to the working electrode 18 and the counter electrode 20. The current density between the working electrode 18 and the counter electrode 20 could still be conducted through the corrosive liquid environment, and the dialed-in difference in potential would be transmitted through the working electrode 18, over the ionic dielectric surface 23 between the working electrode 18 and the outside positioned reference electrode 16, and through the reference electrode 16. It is important to have the working electrode 18 between the reference and counter electrodes 16 and 18, respectively, because by positioning the working electrode 18 as such, the resistance between the working electrode 18 and the reference electrode 16 does not have to be determined, the dielectric surface between the working electrode 18 and the counter electrode 20 does not have to be made ionically conductive, and the current density no longer need be conducted over any ionic dielectric surface 23 between the working electrode 18 and the counter electrode 20.

of FIGS. 18-39

My invention will be illustrated by the following set forth examples which are given by way of illustration and not by any limitation. All parameters such as distances, concentrations, compounds, temperature rates, times, etc., submitted in these examples are not to be construed to unduly limit the scope of my invention. The potentials and currents were respectively read with a Keithly 616 Digital Electrometer, volt meter 50, and a Keithly battery powered electrometer Model 600B, meter 48. The current readings were achieved with the resistor 46 set at 1 meg ohm. To further reduce noise so that small (of the order of 0.004 micro amps) corrosion currents could be measured, all of the electronics, pumps and the autoclave in these examples were put to a common ground. This reduced ground loop currents to nominally 0.4 micro amps in 40% brine/oil mixture. In a 2% brine/oil mixture the ground loop currents were reduced to even a smaller order of magnitude. Glass liners were used to further reduce these residual currents by a factor of nominally two. Any residual currents remaining were then nulled to zero by adjusting the output potential to zero current as read by meter 48, the Keithly electometer. Ground loop currents can also be reduced to zero by using a potentiostat which does not internally ground the working (sample) electrode. Corrosion currents in these examples were calculated from the Stern-Geary equation with a computer using a computer curve fitting procedure as described by N. Greene and R. Gandhi in Materials Perf. 21,34 (July 1982). Typical Tafel constants were BA = 70 mv/decade and BC = 110 mv/decade. These were independent of probe design as indeed they should have been, being constants related to the corrosion mechanism per se.

The predetermined difference in potential between reference electrode 16 and an area in the surrounding corrosive liquid in general microscopic proximity thereto were taken to be that potential measured at zero current flow, as was previously mentioned. The predetermined difference in potential by way of illustration for certain particular crudes and certain crude/brine mixtures for the various embodiments of the probe 12 were as follows:

| Mixtures | Difference in Potential (Volts) Figs. 33 & 34 Probe | Figs. 29 & 30 Probe |
|---|---|---|
| Crude B + 40% Brine | * | * |
| Crude C + 0.2% Brine | +0.1136 | +0.1136 |
| Crude C + 2% Brine | + .0750 | + .0750 |
| Crude C + 5% Brine | + .0683 | + .0683 |
| Crude C + 10% Brine | + .0220 | + .0220 |
| Crude C + 15% Brine | − .01370 | − .01370 |
| Crude C + 20% Brine | + .0125 | + .0125 |
| Crude D | + .0403 | + .0403 |
| Crude D + 2% Brine | + .0195 | + .0195 |
| Crude D + 5% Brine | + .01463 | + .01463 |

*Not measured

High pressure measurements in these following examples were made in a standard Autoclave Engineering 2-liter, 316 stainless steel autoclave. Electrode probes were passed through the autoclave lid with standard Swagelok fittings to within 1 3/8" of the autoclave base. Pressure was monitored with an Autoclave Engineering digital meter with a solid state sensor, Model T 5106-05-B10. The $CO_2$ pressure was held at 760 psig. Temperature control was via an Autoclave Engineering temperature controller "Solid State Controller #520". This particular unit cycled between 192°F and 174°F over a nominally 90 minute period when set for 185°F. This had a neglible effect on corrosion rate. Measurements of the corrosion rate parameter were at 186° $\pm$3°F. This variation was reduced to about half by manual adjustment of the power to the heater while successive measurements were being made.

## EXAMPLE VII

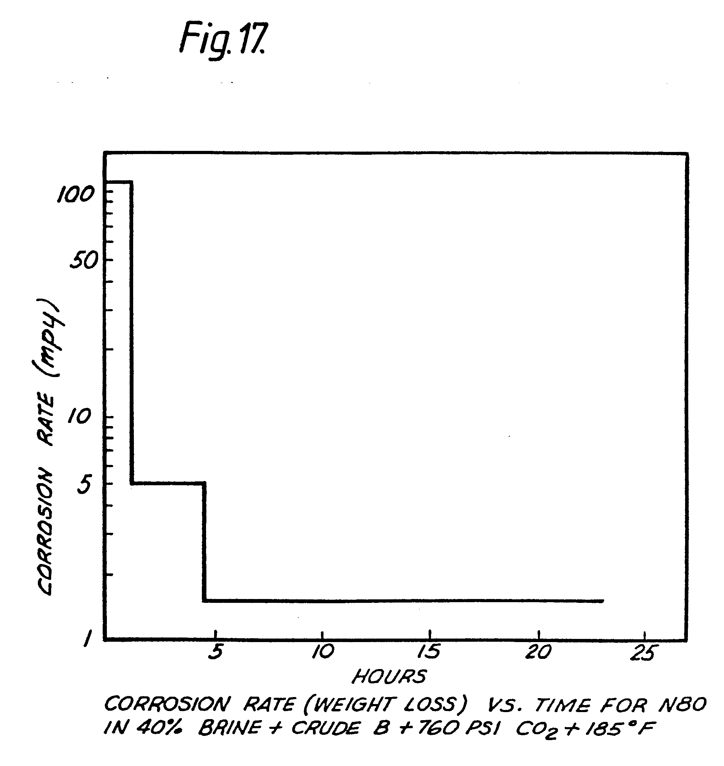

Fig. 31 shows the measurement of current-potential curves in the 40% brine in Crude B crude for the probe 12 embodiment of Figs. 16 and 17, before and after activation with 10M KOH, 80°C (2 hrs.). The measurement of the current (microamps) for before and after activation are -0.002 and -0.1, respectfully at e.m.f. (volts) between reference electrode 16 and the working electrode 18 for before and after activation of -0.732 and -.401, respectfully. The resistance (megohms) between reference electrode 16 and working electrode 18 in each case is 0.8 and .095, respectfully. The e.m.f. (volts) between the reference electrode 16 and a point in the crude in the immediate vicinity of the reference electrode 16 is -0.266 for before activation and -0.017 for after activation. The corrosion currents calculated are .0002 ua and 0.25 ua before and after activation, respectively. Clearly, the treatment with KOH generates a current response to the brine/oil mixture.


### EXAMPLE VIII

Corrosion currents were measured with a KOH treated probe 12 having the embodiment of FIGS. 33 and 34, and with a KOH treated probe 12 having the embodiment of FIGS. 6 and 7. Both embodiments of the probe 12 where in Crude D crude oil at a temperature of 185°F and a $CO_2$ pressure of 760 psig. The results are found in the following Table III (note that since the electrodes varied in surface area the corrosion currents are given in terms of microamps per $cm^2$):

TABLE III

CORROSION CURRENTS MEASURED WITH FIGS. 33 AND 34 PROBE AND
FIGS. 6 AND 7
(Crude Oil D, 760 psi $CO_2$, 185°F)

| Liquid | Applied Current (micro amp) | Measured e.m.f. (volts) between R and W | | Determined e.m.f. (volts) between R and Point in Liquid | Corrosion Current Density (micro amp/cm$^2$) | |
|---|---|---|---|---|---|---|
| | | Figs. 6 & 7 Probe | Figs 33 & 34 Probe | | Figs 6 & 7 Probe | Figs. 33 & 34 Probe |
| Crude D as received | +.01 | -.0232 | -0.1535 | +.00885 | .11 | 0.15 |
| Crude D/brine mixture 2% brine | +.02 | +.0323 | -.00618 | +.00782 | 0.27 | 0.45 |
| 5% brine | -.2 | +.01780 | -.01084 | -.0153 | 1.45 | 11.3 |

EXAMPLE IX

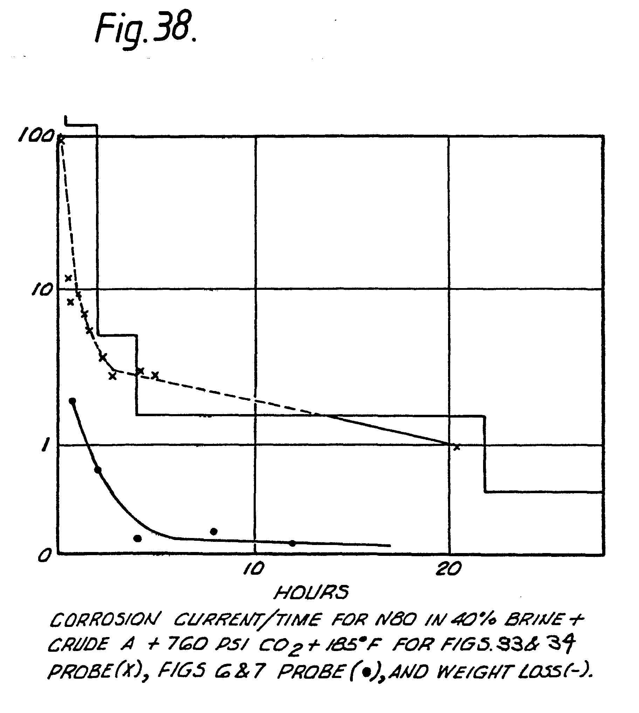

Corrosion current-time profiles for N80 steel at different quantities of the 40 percent (%) brine in Crude A crude are shown in Fig. 38, measured with the probe 12 embodiment of Figs. 33 and 34 and the probe 12 embodiment of Figs. 6 and 7. The measurements were in the autoclave 15 at nominally 760 psi $CO_2$, 182°F. Also included are the corrosion rates measured by the weight loss of coupon. In all cases there generally appears to be a more rapid corrosion process at the beginning, dropping off with time to a lower steady-state rate. Clearly, the electrochemical corrosion rates measured with my improved probe of Figs. 33 and 34 are in closer agreement to those measured by weight loss of coupons than the corrosion rates measured with my probe of Figs. 6 and 7.

EXAMPLE X

Shown in the following Table IV are the average corrosion rates (for 24 hours) as measured by the improved electrochemical technique with the improved probe of Figs. 33 and 34 and by the weight loss of coupons. Obviously, both techniques give comparable results.

TABLE IV

Corrosion Rates in Brine/Crude Oil
(24 Hr., 760 psi $CO_2$, 185°F, NaCl Brine)

| | Corrosion Rate (mpy) | |
|---|---|---|
| Crude Oil | Weight Loss | Electrochemical (Improved) |
| 95% E | 34 | 28 |
| 95% C | 3 | 5 |
| 95% D | .4 | .3 |
| 100% C | 1.1 | 0.8 |

EXAMPLE XI

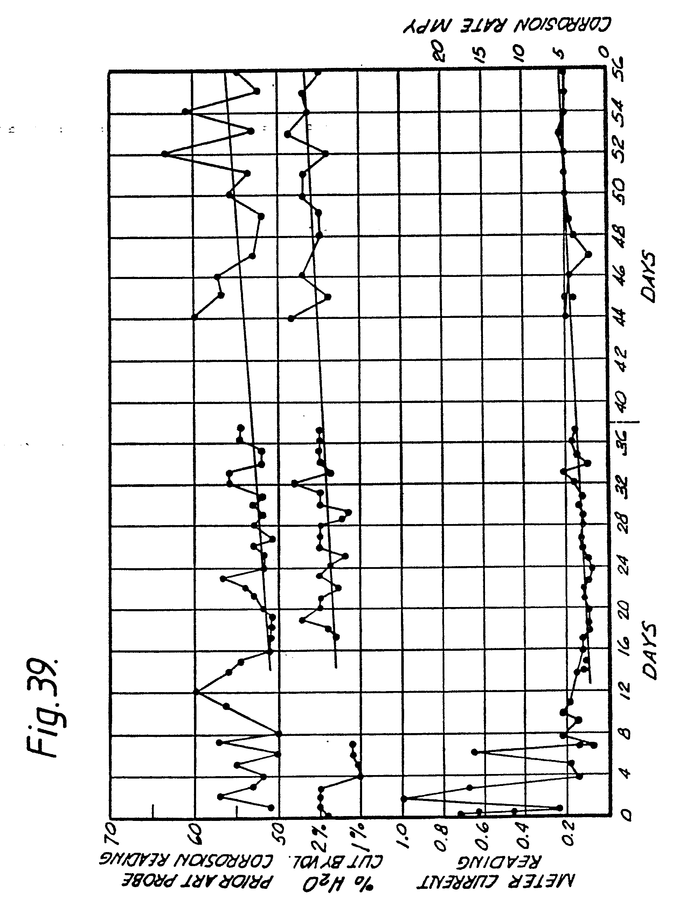

The embodiment of the corrosion probe of Figs. 35 and 36 was connected (as in Fig 18) at right angle to flow in the center of a 6 inch diameter flowline, horizontal section 20 feet from the wellhead of a well flowing 12,500 bbls. oil per day, 200 psi, 150°F, 12% $CO_2$, and 200 ppm $H_2S$. A prior art device (e.g., Corrosometer), measuring the electrical resistance of a corroding wire, was similarly positioned as the corrosion probe, but 10 feet from the wellhead. A 7 mv voltage was dialed into the potentiostat means every day at noon. A meter current reading was taken and calibrated into a corrosion rate in mpy (mills per year). A reading was made on the prior art device - corrosometer. At each reading, a % water cut by volume was determined. Each reading, calibration, and determination was ploted versus the particular day they were made. The resulting plots are in Fig. 39. The breaks in the plots between days 37 and 44 were due to the fact that the field engineer was not available to make the readings and the % water cut determination. The break in the % water cut by volume plot between day 7 and day 17 was due to the fact that the field engineer did not make the % water cut determination. The straight line through each plot is a trend line.

The results in Fig. 39 illustrate that as the % water cut by volume increases, the meter current reading of the corrosion probe of Figs. 35 and 36 increase along with the calibrated corrosion rates. The prior art device corrosion reading also increases with increase % water cut by volume, but the points are more scattered than the points obtained with the corrosion probe of this invention. It is clear from Fig. 39 that the corrosion probe of this invention gives a more sensitive, stable and precise indication of increasing corrosion rate, with increasing % water cut, than the prior art device - corrosometer.

While the present invention has been described herein with reference to particular embodiment thereof and examples therefor, a latitude of modification, various changes and substitutions are intended in the foregoing disclosure and it will be appreciated that in some instances some features of the invention will be employed without a corresponding use of other features without departing from the scope of the invention as set forth.

0174768

## CLAIMS:

1.      A corrosion probe means utilized in measuring the corrosion rates of metals, or the like, in a corrosive liquid environment comprising in combination at least one first electrode means; at least one second electrode means; at least one third electrode means; a dielectric means positioned between each of the first and second electrode means and between each of the second and the third electrode means, said dielectric means having a structure defining an ionically conductive surface.

2.   A corrosion probe means utilized in measuring the corrosion rates of metals, or the like, in a corrosive liquid environment comprising in combination at least one first electrode means; at least one second electrode means; at least one third electrode means; a sheath means; a dielectric means positioned between each of the first and second electrode means and between each of the second and the third electrode means and between said third electrode means and the sheath means, said dielectric means having a structure defining an ionically conductive surface.

3.      A corrosion probe means utilized in measuring the corrosion rates of metals, or the like, in a corrosive liquid environment comprising in combination a first electrode means; a second electrode means; and a dielectric means positioned between the first and the second electrode means, said dielectri means having a structure defining an ionically conductive surface.

ε

0174768

4.      A corrosion probe utilized in measuring the corrosion rates of metals, or the like, in a corrosive liquid environment comprising in combination a first electrode means; a second electrode means; a sheath means; a dielectric means positioned between the first and the second electrode means and between the second electrode means and the sheath means, said dielectric means between said first and said second electrode means having a structure defining an ionically conductive surface.

5.      A corrosion probe means utilized in measuring the corrosion rates of metals, or the like, in a corrosive liquid environment comprising in combination a first electrode means; a second electrode means; a third electrode means; a dielectric means positioned between the first and the second electrode means and between the second and the third electrode means, said dielectric means between said first and said second electrode means having a structure defining an ionically conductive surface.

6.      An apparatus for measuring the corrosion rates of metals, or the like, in a corrosive liquid environment comprising a first electrode means having a first depending conductor means attached thereto; a second electrode means having a second depending conductor means bound thereto; a dielectric means positioned between said first and said second electrode means, said dielectric means having a structure defining an ionically conductive surface; a current conductive means having a third depending conductor means connected thereto; at least one means electrically engaged to said first, said second, and said third

3

0174768

depending conductor means for transmitting amperages through said second electrode means, through the corrosive liquid environment, and through the current conductive means back to the means for transmitting amperages; and at least one means for measuring the difference in potential between the first electrode means and the second electrode means.

7.    A process for measuring the corrosion rates of metals, or the like, in a corrosive liquid environment, or the like, comprising the steps of:

a) attaching electrically to a means for transmitting amperages, a corrosion probe means comprising in integral combination at least one first, at least one second, and at least one third electrode means; a dielectric means having an ionically conductive surface and positioned between the first and second electrode means and between the second and third electrode means; a predetermined known ohmic resistance between the first and second electrode means; and a predetermined known electromotive force between said second electrode means and an area in a surrounding fluid means in general microscopic proximity thereto;

b)   inserting the corrosion probe means into the corrosive liquid environment;

c) transmitting with said means for transmitting amperages a first predetermined known amperage through the first electrode menas, over the ionic dielectric surface between the first electrode means and the third electrode means, and through the third electrode means back to the means for transmitting amperages;

4

0174768

d) measuring simultaneously with step (c) the electromotive force between the first and second electrode means;

e) calculating from the predetermined known amperage of step (c) and the predetermined known ohmic resistance of step (a) an electromotive force between an area in the corrosive liquid environment in general microscopic proximity to the first electrode means and an area in the corrosive liquid environment in general proximity to the second electrode means;

f) determining an electromotive force between the first electrode means and an area in the corrosive liquid environment in general microscopic proximity to the first electrode means by subtracting from the measured electromotive force of step (d), the electromotive force of step (e) and the predetermined known electromotive force of step (a); and

g) computing a corrosion current on the first electrode means from the determined electromotive force of step (f) and the predetermined known amperage of step (a).

8.    A process for measuring the corrosion rates of metals, or the like, in a corrosive liquid environment, or the like, comprising the steps of:

a) attaching electrically to a means for transmitting difference in potential a corrosion probe means comprising in integral combination at least one first, at least one second, and at least one third electrode means; a dielectric means having an ionically conductive surface and positioned between the first and second electrode means and between the second and third electrode means; a predetermined known ohmic resistance between the first and second electrode means; and a predetermined known electromotive force between said second electrode means and an area in a surrounding fluid means in general microscopic proximity thereto;

b) inserting the corrosion probe means into the corrosive liquid environment;

c) transmitting with said means for transmitting difference in potential a predetermined known difference in potential through the first electrode means, over the ionic dielectric surface between the first electrode means and the second electrode means, and through the second electrode means back to the means for transmitting difference in potential;

d) measuring simultaneously with step (c) the amperage being conducted through he first electrode means, over the ionic dielectric surface between the first electrode means and the third electrode means, and through the third electrode means back to the means for transmitting difference in potential;

e) calculating from the measured amperage of step (d) and the predetermined known ohmic resistance of step (a) an electromotive force between an area in the corrosive liquid environment in general microscopic proximity to the first electrode means and an area in the corrosive liquid environment in general microscopic proximity to the second electrode means;

f) determining an electromotive force between the first electrode means an an area in the corrosive liquid environment in general microscopic proximity to the first electrode means by subtracting from the predetermined known difference in potential of step (c), the electromotive force of step (e) and the predetermined known electromotive force of step (a); and

g) computing a corrosion current on the first electrode means from the determined electromotive force of step (f) and the measured amperage of step (d).

0174768

9.    .    A process for measuring the corrosion rates of metals, or the like, in a corrosive liquid environment, or the like, comprising the steps of:

a) attaching electrically to a means for transmitting amperages, a corrosion probe means comprising a first electrode means, a second electrode means, and a current conductive means; a dielectric means having a ionically conductive surface and positioned between the first and second electrode means; and a predetermined known electromotive force between the first electrode means and an area in a surrounding fluid means in general microscopic proximity thereto;

b) inserting the corrosion probe means into the corrosive liquid environment;

c) transmitting with said means for transmitting amperages a first predetermined known amperage through the second electrode menas, through the corrosive liquid environment, and through the current conducrtive means back to the potentiostat means for transmitting amperages;

d) measuring simultaneously with step (c) the electromotive force between the first and second electrode means;

e) determining an electromotive force between the second electrode means and an area in the corrosive liquid environment in general microscopic proximity to the second electrode means by subtracting from the measured electromotive force of step (d), the predetermined known electromotive force of step (a); and

f) computing a corrosion current on the second electrode means from the determined electromotive force of step (e) and the predetermined known amperage of step (a).

10.     A process for measuring the corrosion rates of metals, or the like, in a corrosive liquid environment, or the like, comprising the steps of:

a) attaching electrically to a means for transmitting difference in potential a corrosion probe means comprising a first electrode means, a second electrode means, and a current conductive means; a dielectric means having an ionically conductive surface and positioned between the first and second electrode means; and a predetermined known electromotive force between said first electrode means and an area in a surrounding fluid means in general microscopic proximity thereto;

b) inserting the corrosion probe means into the corrosive liquid environment;

c) transmitting with said means for transmitting difference in potential a predetermined known difference in potential through the second electrode means, over the ionic dielectric surface between the first electrode means and the second electrode menas, and through the first electrode means back to the means for transmitting difference in potential;

d) measuring simultaneously with step (c) the amperage being conducted through the second electrode means, through the corrosive liquid environment, and through the current conductive means back to the means for transmitting difference in potential;

e) determining an electromotive force between the second electrode means and an area in the corrosive liquid environment in general microscopic proximity to the second electrode means by subtracting from the predetermined known difference in potential of step (c), the predetermined known electromotive force of step (a); and

f) computing a corrosion current on the second electrode means from the determined electromotive force of step (e) and the measured amperage of step (d).

Fig.1.

SIGNAL GENERATOR
42
44   44
39
10

POTENTIOSTAT
40

W
R
C

A
48
46
R₁
V
50
34
36
38

14
12

Fig.3.

60
36
26
32
24
30
26
22
18
16
18
20
16
18
32 24 26 28 18 20 30
26 24 28

Fig.4

23
23
22

Fig.2.

Fig.5.

0174768

## Fig.6.

## Fig.7.

Fig.8.

Fig.9.

# Fig.10.

# Fig.11.

# Fig.12.

CURRENT POTENTIAL CURVES(IN CRUDE B + 40% BRINE, 760 PSI $CO_2$, 180°F) FOR FIGS. 6,7 & 11 PROBE BEFORE(X) & AFTER(●) TREATMENT WITH HOT KOH.

Fig.13.

CURRENT (CORROSION)/TIME PROFILES VS. % BRINE (4% NaCl) IN CRUDE C + 760 PSI $CO_2$ + 185° F.

# Fig.14.

CURRENT (CORROSION)/TIME PROFILE VS. % BRINE (4% NaCl)
FOR PARALLEL ELECTRODE PROBE IN CRUDE C + 760 PSI
CO₂ + 185° F.

Fig. 15.

CURRENT (CORROSION) VS. TIME FOR N80 STEEL (X)
AND A LOW ALLOY STEEL (⊗) IN 20% BRINE +
CRUDE C AT 760 PSI $CO_2$ 185°F.

# Fig.16.

CORROSION CURRENT / TIME FOR N80 IN 40% BRINE
+ CRUDE A +760 PSI $CO_2$ + 185°F

*Fig. 17.*

CORROSION RATE (WEIGHT LOSS) VS. TIME FOR N80
IN 40% BRINE + CRUDE B + 760 PSI $CO_2$ + 185°F

# Fig.19.

# Fig.20.

SIGNAL GENERATOR

# Fig.18.

Fig.21.

Fig.22.

0174768

14/22

Fig.23.

Fig.24.

Fig.25.

Fig.26.

Fig.27.

0174768

Fig.28.

Fig.29.

Fig.31.

77/22

0174768

Fig.30.

Fig.32.

**Fig.33.**

**Fig.34.**

*Fig.35.*

*Fig.36.*

## Fig.37.

CURRENT POTENTIAL CURVES (IN CRUDE B + 40% BRINE, 760 P.S.
CO₂ . 180°F) FOR FIGS. 33 & 34 PROBE BEFORE (x) & AFTER (•)
TREATMENT WITH HOT KOH.

Fig.38.

CORROSION CURRENT/TIME FOR N80 IN 40% BRINE +
CRUDE A + 760 PSI CO_2 + 185°F FOR FIGS.33& 34
PROBE(X), FIGS 6 &7 PROBE (•), AND WEIGHT LOSS(-).

Fig. 39.